(19) Europäisches Patentamt / European Patent Office / Office européen des brevets

(11) **EP 3 358 740 A1**

(12) **EUROPEAN PATENT APPLICATION**
published in accordance with Art. 153(4) EPC

(43) Date of publication:
**08.08.2018 Bulletin 2018/32**

(51) Int Cl.:
**H02N 2/18** *(2006.01)*    **F16F 15/02** *(2006.01)*

(21) Application number: **16851205.1**

(22) Date of filing: **15.09.2016**

(86) International application number:
**PCT/JP2016/077345**

(87) International publication number:
**WO 2017/057031 (06.04.2017 Gazette 2017/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.09.2015 JP 2015191052**
**29.09.2015 JP 2015191053**

(71) Applicant: **Yamaha Corporation**
**Hamamatsu-shi, Shizuoka 430-8650 (JP)**

(72) Inventors:
• **KOYAMA, Takao**
**Hamamatsu-shi**
**Shizuoka 430-8650 (JP)**
• **SONE, Takuro**
**Hamamatsu-shi**
**Shizuoka 430-8650 (JP)**
• **KOBAYASHI, Kazuyuki**
**Hamamatsu-shi**
**Shizuoka 430-8650 (JP)**

(74) Representative: **Hoffmann Eitle**
**Patent- und Rechtsanwälte PartmbB**
**Arabellastraße 30**
**81925 München (DE)**

(54) **VIBRATING STRUCTURE**

(57) A vibratory structure includes: a vibratory body 10; piezoelectric elements $12_1$ to $12_4$ mounted to a surface of the vibratory body 10; and resonant circuits $16_1$ to $16_4$ configured to operate in response to electrical energy generated by the piezoelectric elements $12_1$ to $12_4$ so as to cause a change in a damping characteristic of the vibratory body 10 at a target frequency upon vibration of the vibratory body 10, and assuming that an axis of the vibratory body 10 in a direction of principal strains is a reference axis, each of the piezoelectric elements $12_1$ to $12_4$ is fixed at fixing regions S1 and S2 at different locations in the direction of the reference axis G.

**FIG. 1**

EP 3 358 740 A1

## Description

TECHNICAL FIELD

The present invention relates to control of vibration by use of a resonant circuit that includes a piezoelectric element.

BACKGROUND ART

There are known in the art techniques for damping vibration of a vibratory body, such as a structure, by mounting to the vibratory body a piezoelectric element. In Patent Document 1 there is disclosed a technology for reducing vibration of a structure by use of a resonant circuit configured by connecting a shunt circuit consisting of an inductor and a resistor to a piezoelectric element that is mounted to a vibratory structure. In this technique, vibrational energy of the vibratory structure is converted to electrical energy, which is then absorbed by the shunt circuit. The closer a resonant circuit frequency is tuned to a vibration frequency of the vibratory structure, the more efficiently a vibration of the structure can be damped.

Related Art Document

Patent Document

Patent Document 1: Japanese Patent Application Laid-Open Publication No. 2002-61708

SUMMARY OF THE INVENTION

Problem to be Solved by the Invention

Upon vibration of a vibratory body, principal strains (tension and compression) may act in perpendicular directions on a surface of the vibratory body. Patent Document 1 discloses a configuration in which an entire front facing surface of a piezoelectric element is mounted to a surface of the vibratory body. This configuration is subject to a drawback, however, in that in a case that voltage components generated by principal tensile strains (positive values) and voltage components generated by principal compressive strains (negative values) offset each other, the deformation of the piezoelectric element may not be enough to generate sufficient electrical energy to dampen the vibratory body. In view of the above-described problem, one of the objects of the present invention is to provide a vibratory structure, in which a vibrational energy of a vibratory body can be efficiently absorbed.

Means of Solving the Problem

In order to solve the above-described problem, a vibratory structure according to an aspect of the present invention includes: a vibratory body, a piezoelectric element mounted to a surface of the vibratory body, and a resonant circuit operable in response to electrical energy generated by the piezoelectric element, so as to change, upon vibration of the vibratory body a damping characteristic at a target vibration frequency of the vibratory body, and assuming that an axis in a direction of principal strains of the vibratory body is a reference axis, the piezoelectric element is fixed at a plurality of fixing points at different locations along a direction of the reference axis.

In the present invention, use of a piezoelectric element and a resonant circuit enables vibrational energy of the vibratory body to be converted into electrical energy and the electrical energy to be absorbed. Moreover, in the present invention, the piezoelectric element can be fixed at a plurality of fixing points each of which has a different location relative to a direction of a reference axis aligned with the direction of principal strains of the vibratory body. Thus, an amount of deformation of the piezoelectric element caused by principal strains acting in a direction of the reference axis can be made larger than that which occurs under principal strains acting in a direction perpendicular to the reference axis, since in the latter direction a reverse voltage is generated. Accordingly, an amount of electrical energy as a whole generated by the piezoelectric element can be increased, and vibrational energy of a vibratory plate can be efficiently absorbed.

BRIEF DESCRIPTION OF THE DRAWINGS

Fig. 1 is an explanatory diagram of a vibratory structure according to a first embodiment of the present invention.
Fig. 2 is a drawing showing a principal strain tensor distribution on a surface in a first vibration mode and arrangement of a piezoelectric element.
Fig. 3 is a drawing showing a principal strain tensor distribution on a surface in a second vibration mode and arrangement of a piezoelectric element.
Fig. 4 is a drawing showing a principal strain tensor distribution on a surface in a third vibration mode and arrangement of a piezoelectric element.
Fig. 5 is a drawing showing a principal strain tensor distribution on a surface in a fourth vibration mode and arrangement of a piezoelectric element.
Fig. 6 is a diagram showing an effect of the first embodiment, and consist of a graph showing modal damping ratios in the first to fourth vibration modes of vibration of a vibratory body.
Fig. 7 is a diagram showing an effect of the first embodiment, and consists of a gain diagram showing changes in Q factor in the first to fourth vibration modes in a steady state.
Fig. 8 is an explanatory drawing of a vibratory structure according to a second embodiment, and consists of a side view of the vibratory structure.

Fig. 9 is an explanatory drawing of the vibratory structure according to the second embodiment, and consists of a top view of the vibratory structure.

Fig. 10 is an explanatory drawing of a vibratory structure according to a third embodiment.

Fig. 11 is an explanatory drawing of a vibratory structure according to a first modification of the third embodiment.

Fig. 12 is an explanatory drawing of a vibratory structure according to a second modification of the third embodiment.

Fig. 13 is an explanatory drawing of a vibratory structure according to a fourth embodiment.

Fig. 14A is an explanatory drawing of a vibratory structure according to a fifth embodiment.

Fig. 14B is an explanatory drawing of the vibratory structure according to the fifth embodiment.

Fig. 15 is an explanatory drawing of a strain distribution in the first vibration mode and shows how a piezoelectric element for adjusting damping in the first vibration mode is mounted in the fifth embodiment.

Fig. 16 is a diagram showing an effect of the fifth embodiment, and consists of a graph showing changes in modal damping ratios in the first to fourth vibration modes.

Fig. 17 is a diagram showing an effect of combining the fifth embodiment with the first embodiment, and consists of a graph showing changes in modal damping ratios in the first to fourth vibration modes.

Fig. 18 is a diagram showing an effect of combining the fifth embodiment with the first embodiment, and consists of a gain diagram showing changes in Q factor in the first to fourth vibration modes in a steady state.

Fig. 19 is an explanatory drawing of a vibratory structure according to a sixth embodiment.

Fig. 20 is an explanatory drawing of a vibratory structure according to a modification of the sixth embodiment.

Fig. 21 is an explanatory drawing of a vibratory structure according to a seventh embodiment.

Fig. 22 is an explanatory drawing of a vibratory structure according to an eighth embodiment.

Fig. 23A is an explanatory drawing of a vibratory structure according to a ninth embodiment.

Fig. 23B is an explanatory drawing of the vibratory structure according to the ninth embodiment.

Fig. 24 is a drawing in which a guitar is shown as an example of a vibratory structure.

Fig. 25 is a drawing in which a speaker cabinet is shown as an example of a vibratory structure.

MODES FOR CARRYING OUT THE INVENTION

First Embodiment

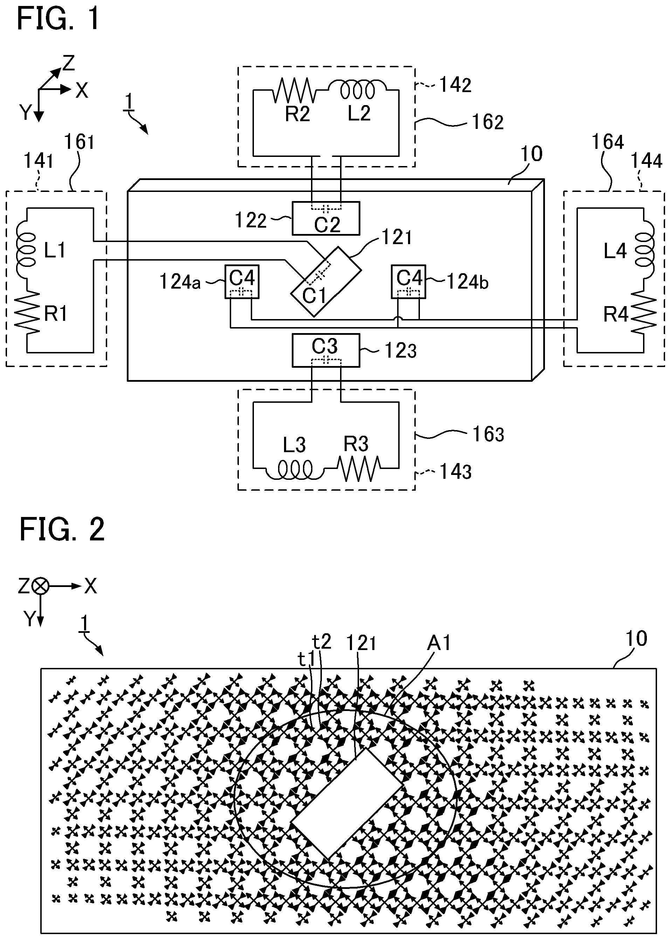

A vibratory structure according to a first embodiment of the present invention will be described below with reference to drawings. Fig. 1 is an explanatory drawing of a vibratory structure 1 according to the first embodiment of the present invention. As shown in Fig. 1, the vibratory structure 1 has a vibratory body 10 that vibrates and produces sound. The vibratory body 10 is a rectangular plate-like body that is elongate in the X direction and has a thickness in the Z direction. X denotes a lengthwise direction of the vibratory body 10, Y denotes a widthwise direction, and Z denotes a thickness direction that is perpendicular to the X-Y plane. The vibratory structure 1 may be a musical instrument that has the vibratory body 10, such as a bar of a metallophone, and which upon vibrating produces sound directly. Another example of the vibratory structure 1 is a musical instrument that includes an enclosed area (body portion) that forms the vibratory body 10, such as a resonating body of a guitar or a violin. In the case of a resonating body, vibration of the vibratory body 10 generates not only a sound directly from the vibratory body 10 but also generates a resonant sound in the enclosed area that forms the vibratory body 10. Additional examples of the vibratory body 10 include a soundboard of a piano, a bar of a percussion instrument, and others. Fig. 1 shows a part of the vibratory body 10. A size and a shape of the vibratory body 10 will differ depending on a type of musical instrument.

Attached to one surface of the vibratory body 10 are plural piezoelectric elements 12 ($12_1$ to $12_4$), each of which has a different capacitance C, and each of which generates an electric field in a thickness direction of the vibratory body 10 responsive to planer expansion and contraction. Each of the piezoelectric elements 12 is connected to an inductor circuit 14 (one of inductor circuits $14_1$ to $14_4$). Each inductor circuit 14 consists of an inductor L and a resistor R connected in series. Thus, each circuit including the piezoelectric element 12 and the inductor circuit 14 has connected in series one of the resonant circuits $16_1$ to $16_4$, a corresponding one of capacitances $C_1$ to $C_4$, a corresponding one of the inductors $L_1$ to $L_4$, and a corresponding one of the resistors $R_1$ to $R_4$.

By carrying out modal analysis or the like of vibration, vibration of the vibratory body 10 can be expressed as a superposition of a plurality of vibration modes, each of which modes has a different frequency. Thus, in the present embodiment, vibration of the vibratory body 10 is expressed as a superposition of a first vibration mode (primary mode), a second vibration mode (secondary mode), a third vibration mode (tertiary mode), and a fourth vibration mode (quaternary mode).

The resonant circuits $16_1$ to $16_4$ shown in Fig. 1 respectively correspond to the first to fourth vibration modes. Specifically, the resonant circuit $16_1$ consisting of the piezoelectric element $12_1$ and the inductor circuit

$14_1$ is utilized in the first vibration mode. The resonant circuit $16_2$ consisting of the piezoelectric element $12_2$ and the inductor circuit $14_2$ is utilized in the second vibration mode. The resonant circuit $16_3$ consisting of the piezoelectric element $12_3$ and the inductor circuit $14_3$ is utilized in the third vibration mode. The resonant circuit $16_4$ consisting of the piezoelectric element $12_4$ (piezoelectric elements $12_{4a}$ and $12_{4b}$) and the inductor circuit $14_4$ is utilized in the fourth vibration mode. The piezoelectric element $12_4$ consists of two piezoelectric elements $12_{4a}$ and $12_{4b}$, and the two piezoelectric elements $12_{4a}$ and $12_{4b}$ are connected in parallel to the inductor circuit $14_4$.

In the present embodiment, each of the piezoelectric elements $12_1$ to $12_4$ is a rectangular plate. An entire surface each of the piezoelectric elements $12_1$ to $12_4$ is mounted to the surface of the vibratory body 10 by use of an adhesive or the like. Each of the piezoelectric elements $12_1$ to $12_4$ is polarized so as to each generate an electric field in the thickness direction in response to in-plane strains. A pair each of corresponding planar electrodes is provided on a surface of each of the piezoelectric elements $12_1$ to $12_4$, which surfaces are oriented to face in the thickness direction of the vibratory body. The pairs of electrodes of the piezoelectric elements $12_1$ to $12_4$ are respectively connected by lead wiring to the inductor circuits $14_1$ to $14_4$. Respective areas of the piezoelectric elements $12_1$ to $12_4$ are made equivalent to one another. The piezoelectric element $12_4$ consists of the two piezoelectric elements $12_{4a}$ and $12_{4b}$, and the two piezoelectric elements $12_{4a}$ and $12_{4b}$ are connected in parallel. A total area of the two piezoelectric elements $12_{4a}$ and $12_{4b}$ is made equivalent to that of each of the piezoelectric elements $12_1$ to $12_3$. By connecting a plurality of piezoelectric elements in parallel, as with the piezoelectric element $12_4$, each of the piezoelectric elements connected in parallel functions in a manner equivalent to each of the piezoelectric elements $12_1$ to $12_3$. While an example is given here in which the piezoelectric element $12_4$ consists of the two piezoelectric elements $12_{4a}$ and $12_{4b}$, the piezoelectric element $12_4$ may consist of three or more piezoelectric elements connected in parallel. Moreover, each of the other piezoelectric elements $12_1$ to $12_3$ may also consist of a plurality of piezoelectric elements connected in parallel.

The inductor circuit $14_1$ consists of the inductor $L_1$ and the resistor $R_1$ connected in series; the inductor circuit $14_2$ consists of the inductor $L_2$ and the resistor $R_2$ connected in series; the inductor circuit $14_3$ consists of the inductor $L_3$ and the resistor $R_3$ connected in series; and the inductor circuit $14_4$ consists of the inductor $L_4$ and the resistor $R_4$ connected in series.

Each of the inductors $L_1$ to $L_4$ may be in the form of a coil or the like. The inductors $L_1$ to $L_4$ may be variable inductors to provide adjustable inductances (L). The resistors $R_1$ to $R_4$ may be variable resistors to provide adjustable resistance values (R). Further, the vibratory structure 1 is provided with a switch (not shown) for connecting (ON) or disconnecting (OFF) the inductor circuits $14_1$ to $14_4$ to/from the piezoelectric elements $12_1$ to $12_4$. A switch each may be provided to independently control the respective inductor circuits $14_1$ to $14_4$. Alternatively, a single switch may be provided to collectively control the inductor circuits $14_1$ to $14_4$. Further, configuration of the inductor circuits $14_1$ to $14_4$ is not limited by the above description. For example, each of the inductor circuits $14_1$ to $14_4$ may consist of a simulated inductor circuit connected to an external power source. In the present embodiment, by configuring the inductor circuits $14_1$ to $14_4$ to each have a corresponding pair of the inductors $L_1$ to $L_4$ and the resistors $R_1$ to $R_4$, control of the inductor circuits $14_1$ to $14_4$ is made convenient as compared to a configuration in which simulated inductor circuits are used, since there is no need for an external power source.

A single resonant circuit can provide efficient damping only in a narrow range of a vibratory frequency. Thus, in order to enable efficient damping in all the first to fourth vibration modes, with each having different vibration frequencies, a configuration is employed whereby a damping characteristic for each of vibration components within a frequency of each vibration mode can be adjusted individually by use of a corresponding one of the resonant circuits $16_1$ to $16_4$.

Description will now be given of the principle by which a change in damping characteristics of the resonant circuits $16_1$ to $16_4$ causes a change in damping characteristics for vibration components in the frequencies in the first to fourth vibration modes. Electrical configurations of the resonant circuits $16_1$ to $16_4$ are substantially the same as each other, and therefore the following description will mainly be directed to the resonant circuit $16_1$. The resonant circuit $16_1$ is an RLC circuit in which the piezoelectric element $12_1$, which is equivalent to a capacitor (C), and the inductor $L_1$ (L) and the resistor $R_1$ (R) in the inductor circuit $14_1$ are connected in series. A resonant frequency f of the RLC circuit is expressed by the numerical formula (1) below.

$$ f = \frac{1}{2\pi\sqrt{LC}} \quad \cdots (1) $$

As expressed in the numerical formula (1) above, by adjusting an inductance L of the inductor $L_1$ the resonant frequency of the resonant circuit $16_1$ can be matched to a resonant frequency of the vibratory body 10 in the first vibration mode. Here, in accordance with established theory for dynamic damping utilizing electromechanical coupled vibration, a dissipation amount (damping amount) of energy can be adjusted by increasing or decreasing the resistance value R of the resistor $R_1$ of the circuit.

As described above, by matching the resonant frequency of the resonant circuit $16_1$ to that of the vibratory body 10 in the first vibration mode, vibrational energy of the vibratory body 10 is converted to electrical energy by the piezoelectric element $12_1$, and the resonant circuit $16_1$ absorbs the electrical energy. Accordingly, a modal damping ratio, which is an example of a damping characteristic, can be increased in the first vibration mode, the modal damping ratio being proportionate to a reciprocal of a Q factor (Quality factor) representative of a sharpness of resonance peak in the resonant circuit. Thus, vibration damping in the first vibration mode can be intentionally accelerated. The Q factor is expressed by the numerical formula (2) below.

$$ Q = \frac{1}{R}\sqrt{\frac{L}{C}} \quad \cdots (2) $$

A magnitude of a modal damping ratio can be adjusted by adjusting the resistance value R of the resistor $R_1$. Generally speaking, a dissipation amount W of energy from a resistor is proportionate to $R \cdot I^2$, where I is an electric current. Accordingly, assuming that the resistance value R is sufficiently high that an influence of AC impedance of another electric device can be disregarded, the dissipation amount W increases as the resistance value R decreases; namely, an increase in the electric current I when squared becomes dominant, while the dissipation amount W decreases as the resistance value R increases. In other words, an amount of increase in the modal damping ratio decreases as the resistance value R of the resistor $R_1$ increases; and the amount of increase in the modal damping ratio increases as the resistance value R of the resistor $R_1$ decreases. Thus, vibration in the first vibration mode can be rapidly damped responsive to a decrease in the resistance value R of the resistor $R_1$. Thus, by adjusting the resistance value R of the inductor circuit $14_1$ to an appropriate value, modal damping ratio in the first vibration mode can be flexibly adjusted. This type of adjustment also can be applied to the other resonant circuits $16_2$ to $16_4$ in substantially the same way as that deployed for the resonant circuit $16_1$. Thus, individual adjustment of each of the modal damping ratios in the first to fourth vibration modes can be realized by use of a corresponding one of the inductor circuits $14_1$ to $14_4$.

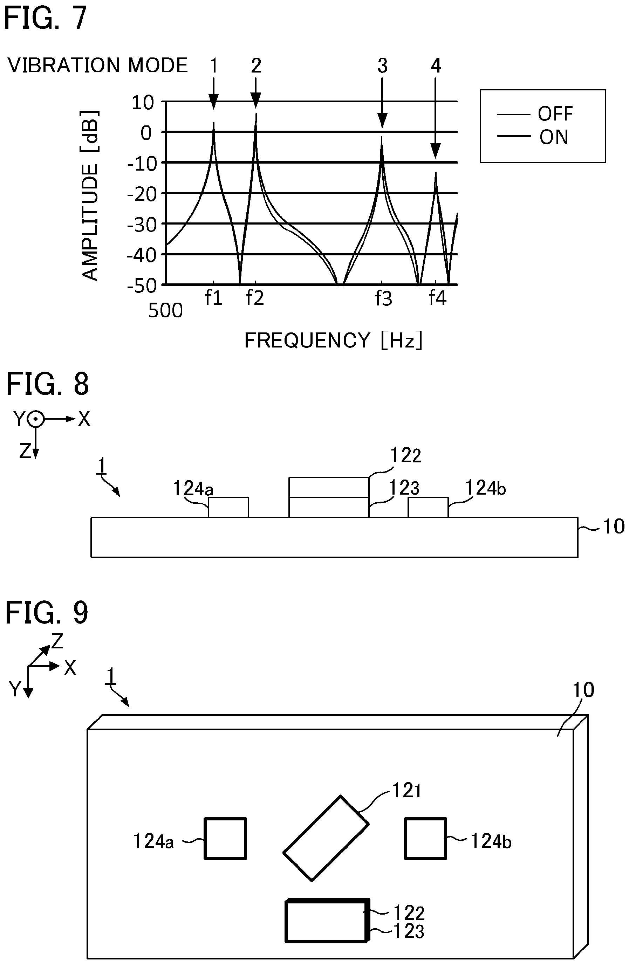

Resonant frequencies of the resonant circuits $16_1$ to $16_4$ vary depending on inductances L of the inductors $L_1$ to $L_4$. An inductance L of the inductor $L_1$ of the resonant circuit $16_1$ is set such that a resonant frequency of the resonant circuit $16_1$ is approximate to or matches a target frequency $f_1$ in the first vibration mode. Likewise, an inductance L of the inductor $L_2$ of the resonant circuit $16_2$ is set such that a resonant frequency of the resonant circuit $16_2$ is approximate to or matches a target frequency $f_2$ in the second vibration mode. An inductance L of the inductor $L_3$ of the resonant circuit $16_3$ is set such that a resonant frequency of the resonant circuit $16_3$ is approximate to or matches a target frequency $f_3$ in the third vibration mode. An inductance L of the inductor $L_4$ of the

resonant circuit $16_4$ is set such that a resonant frequency of the resonant circuit $16_4$ is approximate to or matches a target frequency $f_4$ that corresponds to the fourth vibration mode. Thus, the target frequencies $f_1$ to $f_4$ (see Fig. 7) for which adjustment of damping characteristics is carried out differ among the resonant circuits $16_1$ to $16_4$.

Next, arrangements of the piezoelectric elements $12_1$ to $12_4$ in the first embodiment will be described. As described above, optimal arrangement of the piezoelectric elements $12_1$ to $12_4$ differs depending on which mode of the first to fourth vibration modes is utilized as the mode of vibration in the vibratory body 10, where such arrangement enables efficient absorption of vibrational energy by respective ones of the piezoelectric elements $12_1$ to $12_4$. In the present embodiment, as shown in Fig. 1, each of the piezoelectric elements $12_1$ to $12_4$ is arranged at an optimal location and orientation for a corresponding one of the first to fourth vibration modes.

In the following, with reference to Fig. 1 specific description will be given individually with regard to optimal arrangements of the piezoelectric elements $12_1$ to $12_4$ for each of the first to fourth vibration modes. Figs. 2 to 5 are each diagrams showing a principal strain tensor distribution and an arrangement of a piezoelectric element on a surface of the vibratory body 10 in accordance with a corresponding vibration mode. Since the vibratory body 10 is in the form of a thin plate, strains in the thickness direction (Z direction) among the principal strains that occur due to vibration of the vibratory body 10 are small. Thus, herein, the principal strains correspond to the following two types of strains: principal strains tl that occur on the surface of the vibratory body 10 in a direction that is inclined at a 45 degree angle relative to the X direction (tensile strains (+) at the moment at which the strains shown in each of Figs. 2 to 5 occur); and principal strains that occur on the surface of the vibratory body 10 in a direction perpendicular to the direction of the principal strains tl (compressive strains (-) at the moment at which the strains shown in each of Fig. 2 to 5 occur). The principal strain distributions in Figs. 2 to 5 are obtained by eigenvalue analysis. The principal strain distributions in Figs. 2 to 5 show, as vectors, principal strains tl and principal strains t2 that occur on the surface in each of the first to fourth vibration modes upon vibration of the vibratory body 10. If the vibratory body 10 vibrates only in one of these modes, tension and compression repeatedly alternate with each other on the surface of the vibratory body 10, and as a result, a direction of strains alternately switches between tensile strains and compressive strains. In some cases, the principal strains tl and the principal strains t2 may each be tensile strains. Similarly, in some cases, the principal strains tl and the principal strains t2 may each be compressive strains. The principal strain tensor distributions in Figs. 2 to 5 show as vectors the maximum principal strains tl and the maximum principal strains t2 during vibration.

Fig. 2 is a diagram showing a principal strain distribution and an arrangement of the piezoelectric ele-

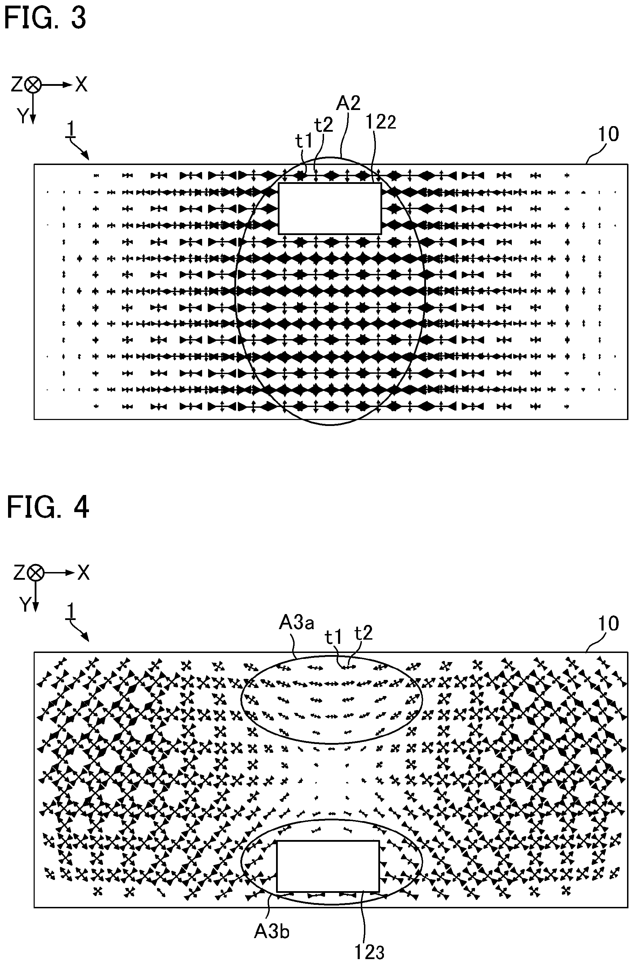

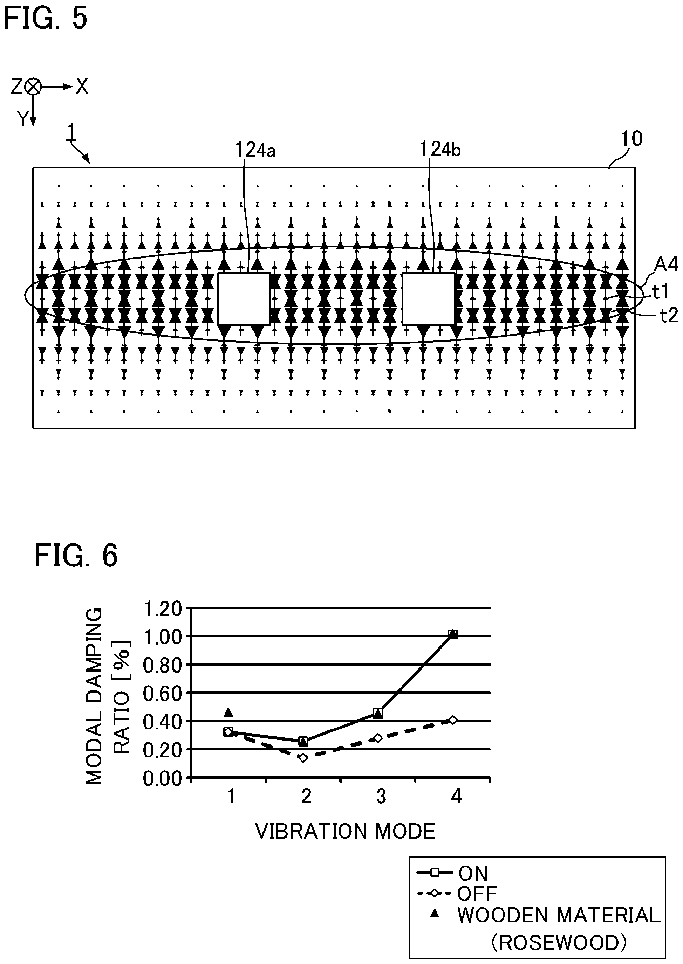

ment $12_1$ in the first vibration mode. Fig. 3 is a diagram showing a principal strain distribution and an arrangement of the piezoelectric element $12_2$ in the second vibration mode. Fig. 4 is a diagram showing a principal strain distribution and an arrangement of the piezoelectric element $12_3$ in the third vibration mode. Fig. 5 is a diagram showing a principal strain distribution and an arrangement of the piezoelectric elements $12_{4a}$ and $12_{4b}$ in the fourth vibration mode.

As shown in Figs. 2 to 5, magnitudes and directions of the principal strains tl and the principal strains t2 on the surface of the vibratory body 10 differ depending on a location on the vibratory body 10 plane. A magnitude of a piezoelectric effect of the piezoelectric element 12 is proportionate to an amount of in-plane strains occurring in the piezoelectric element 12, where the piezoelectric element is planar and generates an electric field in the thickness direction in response to in-plane expansion and/or contraction. The amount of in-plane strains of the piezoelectric element 12 is considered to be more or less the same as an amount of strains on the surface of the vibratory body 10 to which the piezoelectric element 12 is mounted. Thus, when the piezoelectric elements $12_1$ to $12_4$ are mounted to the surface of the vibratory body 10 at locations where principal strains are large, voltages generated by the piezoelectric elements $12_1$ to $12_4$ also are large. In this way, vibrational energy of the vibratory body 10 can be absorbed efficiently and modal damping ratios can be adjusted readily. Amounts of strains on the surface of the vibratory body 10, i.e., a magnitude of an amount of in-plane strains of the piezoelectric element 12, can be regarded as an absolute value of a sum of the principal strains (t1 + t2). Thus, to maximize efficiency the piezoelectric element 12 is arranged in a region where an amount of the strains as defined above is large. Accordingly, in the present embodiment, the piezoelectric elements $12_1$ to $12_4$ are arranged on the plane of the vibratory body 10 in regions A1 to A4, respectively, since in each region an absolute value of a sum of the principal strains t1 and the principal strains t2 (where tension is positive and compression negative) is large.

In the first vibration mode shown in Fig. 2, in the region A1 of the surface of the vibratory body 10, with the region A1 including the center of the vibratory body 10, a magnitude (vector length) of the principal strains t1 (tensile strains (+) at the moment shown in Fig. 2) in a first direction inclined clockwise at a 45 degree angle relative to the X direction differs from a magnitude of the principal strains t2 (compressive strains (-) at the moment shown in Fig. 2) in a second direction perpendicular to the first direction. In other words, an absolute value of a total sum of the principal strains t1 (tensile strains (+)) and the principal strains t2 (compressive strains (-)) is larger in the region A1 than in other regions. Accordingly, in the first embodiment, the piezoelectric element $12_1$ corresponding to the first vibration mode is disposed in the region A1.

In the second vibration mode shown in Fig. 3, differences between strains in the X direction and strains in the Y direction are pronounced in the region A2 of the surface of the vibratory body 10, the region including a midpoint of the surface of vibratory body 10 in the X direction. In other words, an absolute value of a total sum of the principal strains tl and the principal strains t2 is larger in the region A2 than in other regions. Accordingly, in the first embodiment, the piezoelectric element $12_2$ corresponding to the second vibration mode is arranged in the region A2 at a location at which the piezoelectric element $12_2$ does not overlap the piezoelectric element $12_1$, and which is on a negative Y-direction side relative to the center of the vibratory body 10.

In the third vibration mode shown in Fig. 4, there is a significant difference between the principal strains tl occurring approximately parallel to the X direction and the principal strains t2 occurring approximately parallel to the Y direction in a region A3a and a region A3b of the surface of the vibratory body 10. Each of the region A3a and the region A3b is a part of a region including a midpoint in the X direction of the surface of vibratory body 10, the region A3a being on a negative Y-direction side relative to the center of the vibratory body 10, and the region A3b being on a positive Y-direction side relative to the center of the vibratory body 10. In other words, an absolute value of a total sum of the principal strains tl and the principal strains t2 is larger in the regions A3a and A3b than in other regions. Accordingly, in the first embodiment, the piezoelectric element $12_3$ corresponding to the third vibration mode is disposed in the region A3b. A region with large differences between the principal strains t1 and the principal strains t2 is also present proximate to both edges of the vibratory body 10 in the lengthwise direction. Since areas of these regions are extremely small, however, it is preferable to arrange the piezoelectric element $12_3$ either in the region A3a or in the region A3b.

In the fourth vibration mode shown in Fig. 5, there is a considerable difference between the principal strains t1 in the X direction and the principal strains t2 in the Y direction in the region A4 of the surface of the vibratory body 10, the region including an intermediate portion of the surface of the vibratory body 10 in the Y direction. In other words, an absolute value of a total sum of the principal strains tl and the principal strains t2 is larger in the region A4 than in other regions. Accordingly, in the first embodiment, the piezoelectric elements $12_{4a}$ and $12_{4b}$ corresponding to the fourth vibration mode are disposed in the region A4 at locations at which the piezoelectric elements $12_{4a}$ and $12_{4b}$ do not overlap the piezoelectric element $12_1$ and which are on a positive side and a negative side in the X direction, respectively, relative to the center of the vibratory body 10.

Experimental results for verifying effects of the first embodiment will now be described. Figs. 6 and 7 are graphs showing experimental results for verifying effects of the first embodiment. In this experiment, the piezoe-

lectric elements $12_1$ to $12_4$ were mounted to the vibratory body 10 made of carbon fiber reinforced plastic (CFRP), by adhering each of the entire front facing surfaces to the vibratory body 10, such that these areas served as fixing regions. Fig. 6 is a graph showing modal damping ratios in the first to fourth vibration modes. In Fig. 6, the horizontal axis represents an order of mode of vibration, and the vertical axis represents a modal damping ratio. Fig. 7 shows frequency characteristics of vibration of the vibratory body 10, or more specifically, Fig. 7 is a gain diagram showing changes in a Q factor in steady characteristics of the respective vibration modes. In Fig. 7, $f_1$ to $f_4$ on the X axis represent target frequencies in the first to fourth vibration modes, respectively, for which the adjustment of damping characteristics was carried out. The line connecting the white squares in Fig. 6 shows experimental results in a case where the inductor circuits $14_1$ to $14_4$ were turned on, i.e., connected to the piezoelectric elements $12_1$ to $12_4$. The line connecting the white diamonds in Fig. 6 shows experimental results in a case where the inductor circuits $14_1$ to $14_4$ were turned off, i.e., disconnected from the piezoelectric elements $12_1$ to $12_4$. The broad line in Fig. 7 shows experimental results in a case where the inductor circuits $14_1$ to $14_4$ were turned on, i.e., connected to the piezoelectric elements $12_1$ to $12_4$. The narrow line in Fig. 7 shows experimental results in a case where the inductor circuits $14_1$ to $14_4$ were turned off, i.e., disconnected from the piezoelectric elements $12_1$ to $12_4$. The line connecting the black triangles in Fig. 6 shows experimental results in a case where the vibratory body 10 made of a wooden material (rosewood) was used, to which the piezoelectric elements $12_1$ to $12_4$ were not attached and the resonant circuits $16_1$ to $16_4$ were not provided.

As shown in Fig. 6, comparing a case in which all of the inductor circuits $14_1$ to $14_4$ were set to be in a connected state (ON) and a case in which all of the inductor circuits $14_1$ to $14_4$ were set to be in a disconnected state (OFF), changes in the modal damping ratios in the second to fourth vibration modes were significant, whereas no significant change was observed in the first vibration mode. Furthermore, in Fig. 7, comparing a case where all of the inductor circuits $14_1$ to $14_4$ were set to be in the connected state (ON) and a case where all of the inductor circuits $14_1$ to $14_4$ were set to be in the disconnected state (OFF), the Q values in the frequency bands corresponding to the respective second to fourth vibration modes decreased, leading to a decrease in each of their amplitudes (gains); whereas no significant change was observed in the first vibration mode. Thus, in the first embodiment, each of the modal damping ratios in different vibration modes can be increased by an individually determined, discrete amount by using a corresponding one of the inductor circuits $14_1$ to $14_4$, and vibration can be damped separately for different vibration modes, and acoustic characteristics that are desirable from a viewpoint of damping characteristics can be realized. Thus, a sound that is produced by the vibratory body 10 can be advantageously modified.

It is of note that, according to the experimental results shown in Figs. 6 and 7, the modal damping ratio in the first vibration mode could not be changed significantly. The reasons therefor can be posited, as follows. The principal strains t1 and the principal strains t2 existing on the surface of the vibratory body 10 in the first vibration mode in the experiment happened to have opposite signs (positive and negative) and, moreover, over most of the surface area, magnitudes of the principal strains t1 and the principal strains t2 were equal. Thus, in the region A1 also, to which the piezoelectric element $12_1$ was mounted, an absolute value of the total sum of the principal strains t1 and the principal strains t2 was small.

In the first vibration mode, it is not always the case that the tension and compression occur concurrently respectively as the principal strains t1 and the principal strains t2, and there may be cases where both of the principal strains t1 and t2 are either tensile or compressive. In such a first vibration mode, an absolute value of a total sum of the principal strains t1 and the principal strains t2 is large. Thus, if, in the first vibration mode, an absolute value of a total sum of the principal strains t1 and the principal strains t2 is large in a region to which the piezoelectric element $12_1$ is mounted, vibration can be damped separately for each of the first to fourth vibration modes.

As described above, there may be a vibration mode in which there exists only a region with small absolute values of total sums of the principal strains t1 and the principal strains t2. Thus, it may sometimes not be possible to find an appropriate region to which to mount the piezoelectric element $12_1$ to attain an efficient damping effect. It was found, through experiments conducted by the present inventors, that even in such cases, efficient damping could be attained by modifying a manner of mounting the piezoelectric element 12 to the vibratory body 10. This matter will be described later in detail in the fifth and subsequent embodiments.

Second Embodiment

A second embodiment of the present invention will now be described. In the following description, elements having substantially the same actions and functions of like elements in the first embodiment will be denoted by like reference symbols, and detailed explanation of the same will be omitted, as appropriate.

Figs. 8 and 9 are explanatory drawings of a vibratory structure 1 according to the second embodiment. Fig. 8 is a side view of the vibratory structure 1 according to the second embodiment, as viewed from a negative Y-direction side. Fig. 9 is a top view of the same when viewed from a positive Z-direction side. In Figs. 8 and 9, the inductor circuits $14_1$ to $14_4$ are not shown.

In the vibratory structure 1 shown in Figs. 8 and 9, the piezoelectric element $12_2$ shown in Fig. 1 is indirectly attached to the vibratory body 10, and the piezoe-

lectric element $12_2$ is stacked on top of the piezoelectric element $12_3$. The piezoelectric elements $12_2$ and $12_3$ overlap each other across almost their entire areas in the Z direction. Thus, not only does the piezoelectric element $12_3$ deform due to strains caused by vibration of the vibratory body 10, but likewise the piezoelectric element $12_2$ also deforms in substantially the same way as the piezoelectric element $12_3$. Consequently, voltages are generated in each of the piezoelectric elements $12_2$ and $12_3$, thereby enabling vibrational energy to be absorbed by each of the piezoelectric elements $12_2$ and $12_3$. Here, if a target frequency (vibration mode) for modal damping adjustment differs between the piezoelectric elements $12_2$ and $12_3$, for each target frequency vibrational energy is converted to electrical energy. Moreover, as shown in Fig. 3, the piezoelectric element $12_2$ is arranged within the region A2 in which an absolute value of a total sum of the principal strains t1 and the principal strains t2 is large in the second vibration mode. Accordingly, even in a case where the piezoelectric element $12_2$ is stacked on top of the piezoelectric element $12_3$ as shown in Fig. 8, substantially the same effect can be attained as in the case shown in Fig. 1 where the piezoelectric element $12_2$ is arranged separately and apart from the piezoelectric element $12_3$ rather than being stacked thereon. Moreover, as shown in Fig. 9, an area of the vibratory body 10 in which the piezoelectric elements $12_2$ and $12_3$ are arranged can be reduced in a case where the piezoelectric element $12_2$ is stacked on the piezoelectric element $12_3$, as compared to a case where the piezoelectric elements $12_2$ and $12_3$, rather than being stacked one on the other are arranged separately and apart from each other.

The piezoelectric elements $12_2$ and $12_3$ may be adhered to each other by use of an adhesive, or, alternatively they may be held against each other under a force exerted, for example, by a flat spring. Furthermore, an insulating body may be interposed between the piezoelectric elements $12_2$ and $12_3$. The piezoelectric elements $12_2$ and $12_3$ may be adhered to each other or held against each other such that their entire surfaces are in contact with each other or such that only partial surface areas thereof are in contact with each other.

In Figs. 8 and 9, an example is shown in which the piezoelectric element $12_2$ is stacked on top of the piezoelectric element $12_3$. However, a positional relation between the piezoelectric elements $12_2$ and $12_3$ is not limited thereto, and the piezoelectric element $12_3$ may be stacked on top of the piezoelectric element $12_2$. Moreover, it is also possible to mount the piezoelectric element $12_1$, and the piezoelectric elements $12_{4a}$ and $12_{4b}$ to the vibratory body 10 such that the elements are stacked with an entire area of their respective surfaces in contact with each other, or such that only partial areas of their respective surfaces are in contact with each other. Further, if the two piezoelectric elements $12_{4a}$ and $12_{4b}$ also are stacked, a total surface area occupied by the piezoelectric elements $12_1$ to $12_4$ can be reduced. While Fig. 8 shows a case where part of the piezoelectric elements

$12_1$ to $12_4$ are stacked in two layers, a number of piezoelectric elements that can be stacked one on another is not limited thereto, and, for example, a stack may include three or more layers of piezoelectric elements.

Third Embodiment

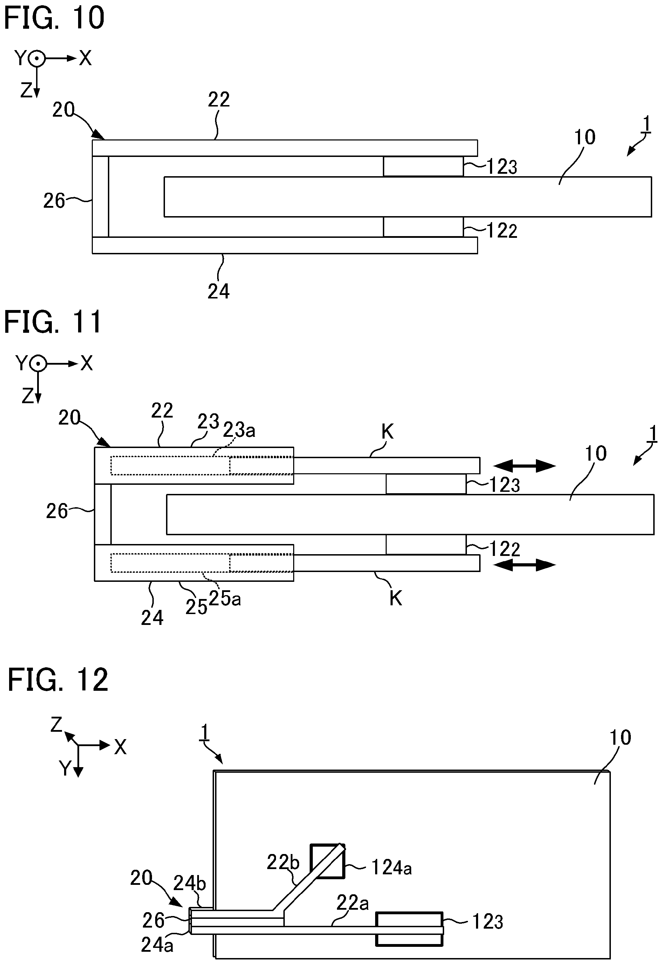

A third embodiment of the present invention will now be described. Fig. 10 is an explanatory drawing of a vibratory structure 1 according to the third embodiment, and consists of a side view of the vibratory structure 1 as viewed from a negative Y-direction side. In Fig. 10, none of the inductor circuits $14_1$ to $14_4$, the piezoelectric element $12_1$, and the piezoelectric elements $12_{4a}$ and $12_{4b}$ are shown.

In the vibratory structure 1 shown in Fig. 10, the piezoelectric element $12_2$ shown in Fig. 1 is mounted to a surface of the vibratory body 10 in opposing relation to a surface to which the piezoelectric element $12_3$ is mounted. The piezoelectric elements $12_2$ and $12_3$ overlap each other in the Z direction. Thus, even in a case where the piezoelectric elements $12_2$ and $12_3$ are mounted separately, one to one surface of the vibratory body 10 and the other to the other surface of the vibratory body 10, it is possible to attain substantially the same effects as are attained in the case where both of the piezoelectric elements $12_2$ and $12_3$ are mounted to a single surface of the vibratory body 10.

The piezoelectric elements $12_2$ and $12_3$ may be adhered to the vibratory body 10 by use of an adhesive, or they may be held there against under a force exerted by a flat spring. Specifically, as shown in Fig. 10, the piezoelectric elements $12_2$ and $12_3$ may, for example, each be held against the vibratory body 10 by way of a holding member 20 consisting of a flat spring. The holding member 20 shown in Fig. 10 is provided with a first arm 22 and a second arm 24, with the vibratory body 10 being located therebetween. A base end of each of the first and second arms 22 and 24 is attached to a supporting member 26. The first and second arms 22 and 24 and the supporting member 26 are formed to be integral, in the form of a flat spring being bent.

By use of the holding member 20 shown in Fig. 10, the piezoelectric element $12_3$ is held between the first arm 22 and a negative side surface of the vibratory body 10 in the Z direction, and the piezoelectric element $12_2$ is held between the second arm 24 and a positive side surface of the vibratory body 10 in the Z direction. This configuration has an advantage in that the piezoelectric elements $12_2$ and $12_3$ each can be detachably mounted to the vibratory body 10. For example, the piezoelectric elements $12_2$ and $12_3$ may be provisionally mounted to the vibratory body 10 by use of the holding member 20, after which each of the piezoelectric elements $12_2$ and $12_3$ can be mounted to the vibratory body 10 at optimal locations by use of an adhesive or the like. The holding member 20 may then either be removed or left in place. Further, as shown in Fig. 10, by separately mounting each of the piezoelectric elements $12_2$ and $12_3$ one to one surface of the vibratory body 10 and the other to the other surface of vibratory body 10, an overall surface area occupied by the piezoelectric elements $12_2$ and $12_3$ is reduced as compared to the case where both of the piezoelectric elements are mounted separately to the same surface of the vibratory body 10.

In Fig. 10 a case is shown in which a piezoelectric element 12 is held by each of the first and the second arms 22 and 24 of the holding member 20 such that the piezoelectric elements $12_2$ and $12_3$ are held respectively against an opposing surface each of the vibratory body 10. The method of mounting the piezoelectric elements 12 is not limited thereto. For example, any one of the piezoelectric elements 12 may be held against a surface of the vibratory body 10 by either one of the first or the second arms 22 or 24 of the holding member 20. Alternatively, as shown in Fig. 8, plural ones of the piezoelectric elements 12 may be stacked one on the other and held against a surface of the vibratory body 10 by either one of the first or the second arms 22 and 24 of the holding member 20.

In Fig. 10 a case is shown where the piezoelectric element $12_2$ is held against a positive side surface of the vibratory body 10 in the Z direction, and the piezoelectric element $12_3$ is held against a negative side surface of the vibratory body 10 in the Z direction. However, arrangement of the piezoelectric elements $12_2$ and $12_3$ is not limited thereto. Conversely, the piezoelectric element $12_2$ may be held against the negative side surface of the vibratory body 10 in the Z direction, and the piezoelectric element $12_3$ may be held against the positive side surface of the vibratory body 10 in the Z direction. Furthermore, each of the piezoelectric element $12_1$ and the piezoelectric elements $12_{4a}$ and $12_{4b}$ may be individually held by separate ones of the holding member 20.

A configuration of the holding member 20 is not limited to that shown in Fig. 10. For example, each of the first arm 22, the second arm 24, and the supporting member 26 may be configured as separate bodies. In this case, each of the first and second arms 22 and 24 may consist of a flat spring, and the supporting member 26 may consist of a fastening member, such as a screw, bolt, or the like. Thus, by fastening the base ends of the first and second arms 22 and 22 in this manner, the first and second arms 22 and 24 are made detachable.

The first and second arms 22 and 24 may be configured to be slidable, whereby their respective lengths can be changed. For example, in a first modification of the third embodiment shown in Fig. 11, the first arm 22 consists of a base end 23 and a flat spring K that is slidably inserted into a hole 23a formed in its base end 23. Likewise, the second arm 24 consists of a base end 25 and a flat spring K that is slidably inserted into a hole 25a provided in its base end 25. The base end 23 of the first arm 22 and the base end 25 of the second arm 24 are connected to each other by way of the supporting member 26. By this configuration, since each flat spring K is slidable, a length of a corresponding one of the first and second arms 22 and 24 can be changed. Accordingly, a range of the vibratory body 10 to which the piezoelectric elements $12_2$ and $12_3$ can be mounted can be varied, as appropriate.

In Fig. 10, an example is shown where the holding member 20 is provided with the first arm 22 positioned on one side of the vibratory body 10, and the second arm 24 positioned on the other side of the vibratory body 10. However, a configuration of the holding member 20 is not limited thereto. Specifically, the single holding member 20 may be provided with a plurality of pairs of the first arm 22 and a plurality of pairs of the second arm 24. One corresponding plurality of pairs of arms is positioned on one side of the vibratory body 10, and the other corresponding plurality of pairs of arms is positioned in opposing relation on the other side of the vibratory body 10. In Fig. 12 there is shown a second modification of the third embodiment with an example of one such configuration. It is of note that the piezoelectric element $12_1$ is not shown in Fig. 12.

In Fig. 12, the holding member 20 is shown with a third arm 22a positioned on one side of the vibratory body 10, and a fourth arm 24a positioned in opposing relation to the third arm 22a on the other side of the vibratory body 10; further shown is a fifth arm 22b positioned on one side on the vibratory body 10, and a sixth arm 24b positioned in opposing relation to the fifth arm 22b on the other side of the vibratory body 10. A base end of the fifth arm 22b is connected to a base end of the third arm 22a, and a distal end of the fifth arm 22b is inclined counterclockwise at a 45 degree angle relative to the third arm 22a. Likewise, a base end of the sixth arm 24b is connected to a base end of the fourth arm 24a, and a distal end of the sixth arm 24b is inclined counterclockwise at a 45 degree angle relative to the fourth arm 24a. In the case of the holding member 20 shown in Fig. 12, the piezoelectric element $12_3$ is held between the third arm 22a and one surface of the vibratory body 10; and the piezoelectric element $12_2$ is held between the fourth arm 24a and the other surface of the vibratory body 10. The piezoelectric element $12_{4a}$, which comprises one part of the piezoelectric elements $12_4$ is held between the fifth arm 22b and one surface of the vibratory body 10; while the piezoelectric element $12_{4b}$, which comprises the other part of the piezoelectric element $12_4$ is held between the sixth arm 24b and the other surface of the vibratory body 10. Thus, in this configuration, by use of a single holding member 20, not only can the piezoelectric elements $12_2$ and $12_3$ be positioned in opposing relation to each other on one side each of the vibratory body 10, but also the piezoelectric elements $12_4$ can be detachably positioned on one side each of the vibratory body 10.

Fourth Embodiment

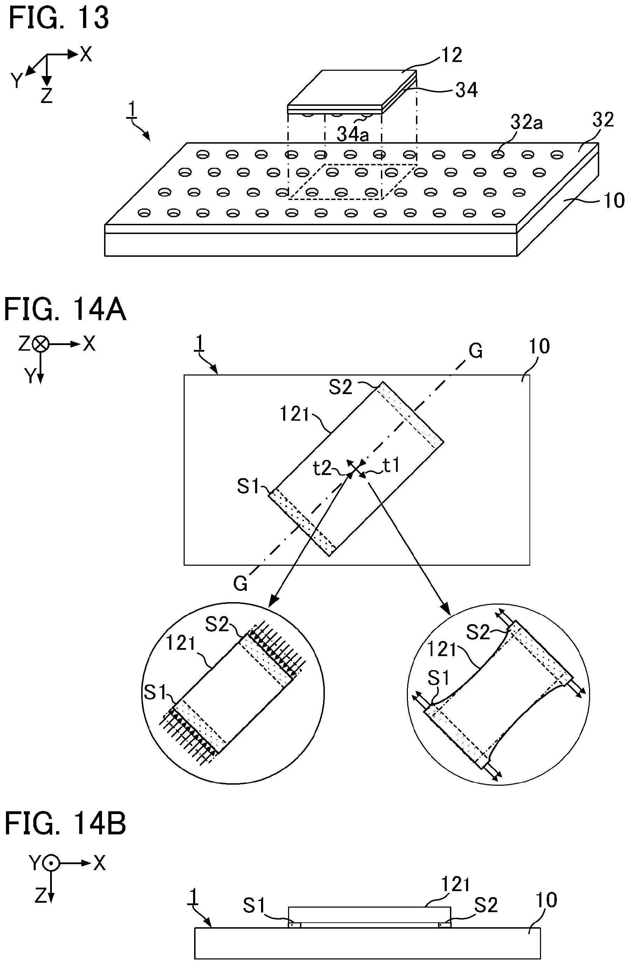

A fourth embodiment of the present invention will now be described. Fig. 13 is an explanatory drawing of a vibratory structure 1 according to the fourth embodiment. In the first to third embodiments, examples are given in which the piezoelectric elements $12_1$ to $12_4$ are mounted to a surface of the vibratory body 10 by use of an adhesive or the like. In contrast, in the fourth embodiment, piezoelectric elements $12_1$ to $12_4$ are mounted to a surface of the vibratory body 10 through recesses adapted to receive protrusions. In the fourth embodiment, fitting by use of recesses and protrusions is applicable to all of the piezoelectric elements $12_1$ to $12_4$, and description thereof will be directed mainly to a piezoelectric element 12.

In Fig. 13, a vibratory body mounting plate 32 is stacked on a surface of the vibratory body 10, and a piezoelectric element mounting plate 34 is stacked on the piezoelectric element 12 on a surface of the element that faces the vibratory body mounting plate 32. A plurality of recesses 32a are formed in the vibratory body mounting plate 32, and protrusions 34a to be fitted into the recesses 32a are formed in the piezoelectric element mounting plate 34. The vibratory body mounting plate 32 has a larger surface area than the piezoelectric element mounting plate 34, and the number of the recesses 32a of the vibratory body mounting plate 32 is greater than the number of the protrusions 34a of the piezoelectric element mounting plate 34.

Using such a configuration, the piezoelectric element 12 is mounted to the surface of the vibratory body 10 by fitting together the recesses 32a and the protrusions 34a. Since on the piezoelectric element 12 side there are a greater number of recesses 32a than protrusions 34a, thereby enabling fitting of the protrusions 34a into recesses 32a at a desired location, the piezoelectric element 12 can be detachably mounted to a desired location on the surface of the vibratory body 10. For example, while Fig. 13 shows a case in which the piezoelectric element 12 is mounted to a surface of the vibratory body 10 such that the lengthwise direction of the piezoelectric element 12 is aligned in the X direction, the piezoelectric element 12 may instead be provided on the surface of the vibratory body 10 such that the widthwise direction of the piezoelectric element 12 is aligned in the X direction. Moreover, orientation of the piezoelectric element 12 is not limited to alignment in the X direction or the Y direction. The piezoelectric element 12 may be arranged such that, as in the case of the piezoelectric element $12_1$, the lengthwise direction thereof is inclined relative to the X direction. In this case, the protrusions 34a may be arranged in accordance with the arrangement of the recesses 32a such that the protrusions are fitted into the recesses if the lengthwise direction of the piezoelectric element 12 is inclined relative to the X direction.

Fig. 13 shows a case in which the recesses 32a are arranged on the vibratory body 10 side by way of the vibratory body mounting plate 32, and the protrusions 34a are arranged on the piezoelectric element 12 side by way of the piezoelectric element mounting plate 34.

However, locations at which the recesses 32a and protrusions 34a are formed are not limited thereto. The recesses 32a may be formed directly on the vibratory body 10 side and the protrusions 34a may be formed directly on the piezoelectric element 12 side. In Fig. 13 a case is shown where the recesses 32a are arranged on the vibratory body 10 side and the protrusions 34a are arranged on the piezoelectric element 12 side. Alternatively, the protrusions 34a may be arranged on the vibratory body 10 side and the recesses 32a may be arranged on the piezoelectric element 12 side, conversely to the arrangement described above.

Fifth Embodiment

A fifth embodiment of the present invention will now be described. In the first to fourth embodiments, examples are given in which the piezoelectric element 12 is mounted to the vibratory body 10, with an entire surface of the piezoelectric element 12 facing the vibratory body 10 being adhered to a surface of the vibratory body 10, such that the entire adhered surface serves as a fixing region. In contrast, in the fifth embodiment, only a part of the piezoelectric element 12 is mounted to a surface of the vibratory body 10, to serve as a fixing region.

Referring to Figs. 2 to 5, description is given above stating that efficient absorption of vibrational energy in the respective vibration modes is enabled by mounting a piezoelectric element 12 to the vibratory body 10 at a region that is subject to a large amount of in-plane strains, whereby a voltage can be readily generated; each such region being determined in accordance with a principal strain distribution in each of the first to fourth vibration modes. Specifically, a piezoelectric element 12 is mounted to a region of the vibratory body 10 where an absolute value of a total sum of the two perpendicular principal strains t1 and t2 is relatively large.

However, if there is an offset between the principal strains t1 and the principal strains t2, a voltage generated will be negligible, even when the individual magnitudes are large in a region in which voltage generated by deformation of the piezoelectric element 12 due to the principal strains t1 and voltage generated by deformation of the piezoelectric element 12 due to the principal strains t2 have opposite signs and the magnitudes are more or less the same. Thus, it will be difficult to efficiently adjust damping characteristics because, if it is in a particular vibration mode in which the surface of the vibratory body 10 is dominated by such a region only, an appropriate location at which to mount the piezoelectric element 12 cannot be determined. For example, in the first vibration mode of the vibratory body 10 shown in Fig. 2, it is difficult to efficiently adjust damping characteristics because a region in which vibrational energy cannot be efficiently absorbed is dominant as a result of the voltage generated due to the strains t1 and the voltage generated due to the strains t2 offsetting each other within the piezoelectric element 12.

Accordingly, in the fifth embodiment, for the purpose of preventing an amount of in-plane strains of the piezoelectric element 12, which is proportionate to a magnitude of a piezoelectric effect, from exactly matching an amount of in-plane strains of the vibratory body 10, the piezoelectric element 12 is mounted to the vibratory body 10 such that only a part of the piezoelectric element 12 is adhered to a surface of the vibratory body 10, such that the amounts of strains generated by the piezoelectric element 12 are anisotropic. In the present embodiment by looking at an advantage of mounting to a surface of the vibratory body 10 a part only, rather than an entire front facing surface of the piezoelectric element 12, an overall voltage can be increased by increasing an influence of deformation of the piezoelectric element 12 due to the strains tl and decreasing an influence of deformation due to the strains t2, or vice versa.

In the following, a specific configuration example of a vibratory structure 1 according to the fifth embodiment will be described. Figs. 14A and 14B are explanatory drawings of the vibratory structure 1 according to the fifth embodiment. Fig. 14A is a top view, and Fig. 14B is a diagram in which a side surface of the vibratory structure 1 is viewed from a direction perpendicular to a reference axis G. In the following description, a focus will be on the first vibration mode of the piezoelectric element $12_1$. In Fig. 14A, the encircled drawing at the left side shows an example of deformation of the piezoelectric element $12_1$ due to the principal strains t2 (compressive strains (-)), and the encircled drawing at the right side shows an example of deformation of the piezoelectric element $12_1$ due to the principal strains t1 (tensile strains (+)).

In Figs. 14A and 14B, a case is assumed in which the piezoelectric element $12_1$ is provided in a region of the surface of the vibratory body 10 where, at a certain moment, the principal strains t1 occur in a direction inclined clockwise at a 45 degree angle relative to the X direction and the principal strains t2 having the same magnitude as that of the principal strains t1 occur in a direction perpendicular to the direction of the principal strains t1. In this case, an axis along a direction of either the principal strains t1 or the principal strains t2 is designated as the reference axis. Here, it is decided that an axis along a direction that is inclined counterclockwise at a 45 degree angle relative to the X direction (the direction in which the principal strains t2 are occurring in Fig. 14A) and that passes through the center of the piezoelectric element $12_1$ is the reference axis G.

As shown in Figs. 14A and 14B, the piezoelectric element $12_1$ is fixed to the surface of the vibratory body 10 at a plurality of fixing regions (S1 and S2) at different locations in the direction of the reference axis G. The fixing regions S1 and S2 in this case are provided on a surface of the piezoelectric element $12_1$ so as to extend on an X-Y plane (on the surface of the vibratory body 10) in a direction perpendicular to the reference axis G, and are spaced apart from each other. The fixing regions S1 and S2 shown in Fig. 14A extend over the entire length of the edges of the piezoelectric element $12_1$ in a direction perpendicular to the reference axis G. Of the surface of the piezoelectric element $12_1$, only the fixing regions S1 and S2 are fixed to the surface of the vibratory body 10; and no other regions than the fixing regions S1 and S2 are fixed.

Accordingly, as shown in the encircled drawing at the left in Fig. 14A, the piezoelectric element $12_1$ is fixed to the surface of the vibratory body 10 only at the fixing regions S1 and S2 at different locations in the reference axis G direction. In relation to the principal strains (t1 or t2) that occur in the vibratory structure 1 in a direction parallel to the reference axis G, the entire piezoelectric element $12_1$ is deformed in its lengthwise direction, including not only the fixing regions S1 and S2 but also the other regions. In contrast, in relation to the principal strains (t1 or t2) that occur in a direction perpendicular to the reference axis G, only the fixing regions S1 and S2 are deformed, as shown in the encircled drawing at the right in Fig. 14A. Accordingly, either the deformation due to the principal strains t1 or the deformation due to the principal strains t2 can be made relatively larger with the other being made relatively smaller. As a consequence, the overall voltage generated can be increased, and as a result vibrational energy can be efficiently absorbed. It is of note that locations of the fixing regions S1 and S2 of the piezoelectric element $12_1$ in the fifth embodiment are not limited to both end portions in the lengthwise direction of the piezoelectric element $12_1$ as shown in Fig. 14A. It would suffice if the fixing regions S1 and S2 are spaced apart from each other in a direction of the reference axis G at an interval that is greater than a width of each of the fixing regions S 1 and S2 in a lengthwise direction thereof (i.e., the width of each of the fixing regions S1 and S2 in a direction perpendicular to the reference axis G).

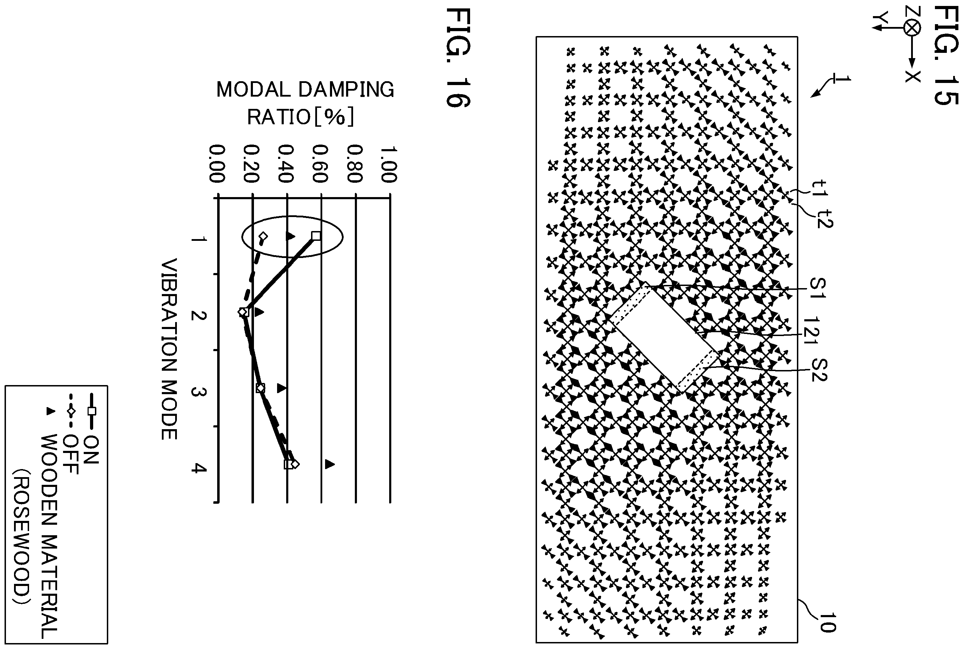

Experimental results for verifying effects of the fifth embodiment will be described next. In the experiment, similarly to the experiments shown in Figs. 6 and 7, a vibratory body 10 made of carbon fiber reinforced plastic (CFRP) was used. In the present experiment, as shown in Fig. 15, the piezoelectric element $12_1$ was attached to the surface of the vibratory body 10 at a location that is substantially the same as that shown in Fig. 2, by adhering only a part (the fixing regions S1 and S2) of the piezoelectric element $12_1$ to the vibratory body 10. The other piezoelectric elements $12_2$ to $12_4$ for the second to fourth vibration modes were mounted to the vibratory body 10 by adhering their entire front facing surfaces to the vibratory body 10 at substantially the same locations as those in the case of the first embodiment. Fig. 16 is a graph showing modal damping ratios in the first to fourth vibration modes in the case as shown in Fig. 15.

In Figs. 2 to 5, it can be observed from the principal strain distributions in the first to fourth vibration modes that a region in which the principal strains t1 and the principal strains t2 are reversed in positivity and negativity (tension and compression) relative to each other and magnitudes thereof are more or less the same is likely to appear in the region A1 at the center of the vibratory body 10 in the first vibration mode shown in Fig. 2. The effects of the fifth embodiment will be verified for the first vibration mode. In Fig. 16, only the piezoelectric element $12_1$ is turned on, i.e., connected to the inductor circuit $14_1$, to adjust the modal damping ratio in the first vibration mode in such a way that it is increased, and the other piezoelectric elements $12_2$ to $12_4$ are turned off, i.e., disconnected from the inductor circuits $14_2$ to $14_4$.

When comparison is made between the effect (shown in Fig. 16) obtained in the case of Fig. 15 in which only a part of the piezoelectric element $12_1$ is mounted to the vibratory body 10 and the effect (shown in Fig. 6) obtained in the case of Fig. 2 in which the entire front facing surface of the piezoelectric element $12_1$ is mounted to the vibratory body 10, it is observed that while Fig. 2 shows almost no increase in the modal damping ratio in the first vibration mode, Fig. 16 shows a noticeable increase therein. Thus, according to the fifth embodiment, an adjustment range of the modal damping ratio can be increased in a vibration mode, such as the first vibration mode, in which it would otherwise be difficult to adjust the modal damping ratio due to occurrence of a region in which the principal strains t1 and the principal strains t2 are reversed in positivity and negativity and magnitudes thereof are more or less the same. Thus, a modal damping ratio can be adjusted more easily.

In contrast, as shown in Figs. 2 to 5, for the other principal strain tensor distributions in the second to fourth vibration modes, there are regions in which the positivity and negativity are reversed but a difference in magnitude between the principal strains t1 and the principal strains t2 is relatively large. In this case, a modal damping ratio can be easily adjusted if a configuration in which the entire front facing surfaces (fixing regions) of the piezoelectric elements $12_2$ to $12_4$ are fixed to the vibratory body 10 as employed in the first embodiment. By adhering only a part of the piezoelectric element $12_1$ to the vibratory body 10 in the first vibration mode alone as in the fifth embodiment, while mounting the entire front facing surfaces of the piezoelectric elements $12_2$ to $12_4$ to the vibratory body as in the first embodiment, a modal damping ratio can be easily adjusted in all of the first to fourth vibration modes. Thus, combining the fifth embodiment with the first embodiment enables easy adjustment of a modal damping ratio in any vibration modes with any principal strain tensor distributions.

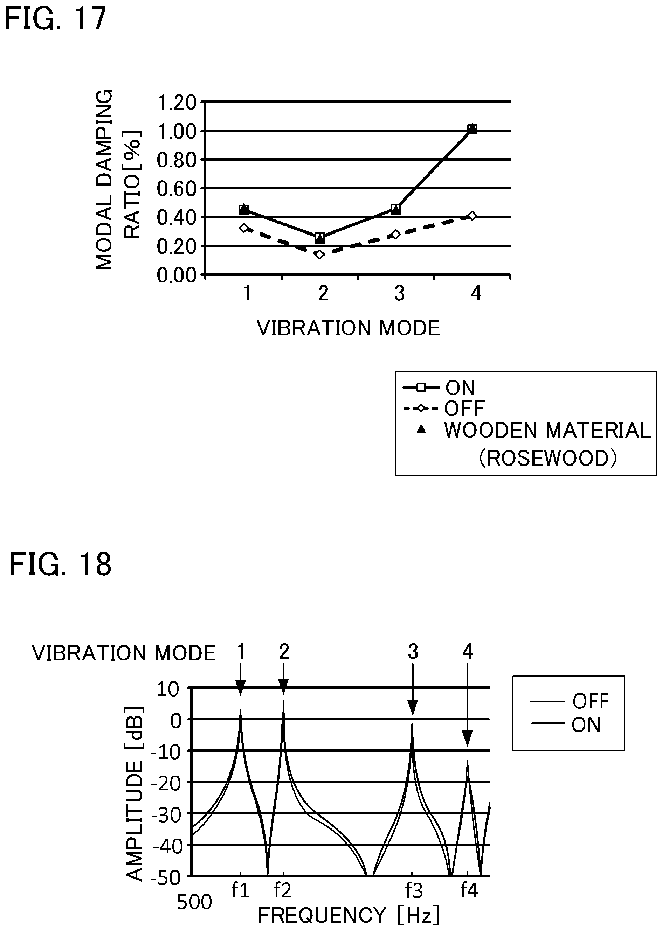

Experimental results for verifying effects that are attained when the fifth embodiment is combined with the first embodiment will now be described. Fig. 17 and Fig. 18 are diagrams showing experimental results for verifying effects that are attained when the fifth embodiment is combined with the first embodiment. In this experiment, similarly to the experiment shown in Fig. 16, a part (the fixing regions S1 and S2) only of the piezoelectric element $12_1$ is adhered to the vibratory body 10 at a location that is substantially the same as that in the fifth embodiment shown in Fig. 15. For the second to fourth vibration modes are the entire front facing surfaces of the other piezoelectric elements $12_2$ to $12_4$ mounted, by adhering them, to the vibratory body 10 at locations that are substantially the same as those in the first embodiment.

Fig. 17 is a graph showing modal damping ratios in the first to fourth vibration modes. Fig. 18 is a diagram showing frequency characteristics of vibration of the vibratory body 10, or more specifically, Fig. 18 is a gain diagram showing changes in Q factor in steady characteristics of the respective vibration modes. Fig. 17 and Fig. 18 correspond to Fig. 6 and Fig. 7, respectively, hence explanation of the graphs will be omitted.

When comparison is made between Figs. 17 and 18 (where a part of the piezoelectric element $12_1$ only is mounted), and Figs. 6 and 7 (where the entire surface of the piezoelectric element $12_1$ also is mounted), as shown in Figs. 17 and 18, adjustment is made to a greater extent not only in the second to fourth vibration modes but also in the first vibration mode in a case where the inductor circuits $14_1$ to $14_4$ are turned on, i.e., connected to the piezoelectric elements $12_1$ to $12_4$, as compared to a case where the inductor circuits $14_1$ to $14_4$ are turned off, i.e., disconnected from the piezoelectric elements $12_1$ to $12_4$. Thus, if the fifth embodiment is combined with the first embodiment, the modal damping ratios in all of the first to fourth vibration modes can be increased individually by discrete amounts by means of the respective inductor circuits $14_1$ to $14_4$. Accordingly, vibration can be damped individually for each of the first to fourth vibration modes even if a particular vibration mode is included where a region having a small absolute value of a total sum of the principal strains t1 and the principal strains t2 is dominant. Thus, desired acoustic characteristics based on damping characteristics can be realized, and as a result, a sound that is produced by the vibratory body 10 can be modified.

It is of particular note that combining the first embodiment with the fifth embodiment enables adjustment of the modal damping ratios in the first to fourth vibration modes to desired values, irrespective of a state of plane strains present in a vibration mode. For this reason, a sound produced by vibration of the vibratory body 10 can be turned into a different sound as if it were generated by vibration of a vibratory body 10 made of a different material. For example, Fig. 17 shows experimental results of adjusting the modal damping ratios in the first to fourth vibration modes to modal damping ratios of a wooden material (rosewood). The material of the vibratory body 10 is, however, carbon fiber reinforced plastic, an average density and a homogenized elastic modulus of which are pre-designed such that resonant frequencies of the vibratory body 10 in the first to fourth vibration modes match frequencies of the wooden vibratory body in the first to fourth vibration modes. As shown in Fig. 17, damping characteristics of the vibratory body 10 made of carbon fiber reinforced plastic in the first to fourth vibration modes and damping characteristics of the vibratory body made of a wooden material (rosewood) in the first to fourth vibration modes can be matched to each other almost exactly. Thus, acoustic characteristics that would be attained using a wooden material can be realized by use of a vibratory body 10 that is formed from a metallic material. The present invention is particularly effective in application to the above described circumstance because generally, matching a plurality of damping characteristics of a vibratory plate involves more difficulty than matching a plurality of natural frequencies of a vibratory plate. That is, despite the vibratory body 10 being made of carbon fiber reinforced plastic, a situation can be realized such that vibration of the vibratory body 10 produces a sound of a wooden material (rosewood) as if it has vibrated. Thus, in the present embodiment, vibration damping characteristics of the vibratory body 10 and, in turn, acoustic characteristics of sounds produced by vibration of the vibratory body 10 can be adjusted in various ways.

As an alternative configuration, a part only of each of the piezoelectric elements $12_2$ to $12_4$ for the second to fourth vibration modes may be adhered to the vibratory body 10 as in the fifth embodiment. By employing this configuration, a maximum value of absorbable vibrational energy may be increased in the second to fourth vibration modes as compared to the first embodiment, and it is expected that an adjustable range of the modal damping ratios in the second to fourth vibration modes will be increased. Moreover, it will be possible to efficiently absorb vibrational energy particularly in regions within the surface of the vibratory body 10 where the principal strains tl and the principal strains t2 are reversed in positivity and negativity and there is only a small difference in magnitude therebetween. Thus, it is expected that an area where modal damping ratios can be adjusted by attaching the piezoelectric elements $12_2$ to $12_4$ can be expanded, and energy absorbing effects equivalent to those of the first embodiment can be achieved using smaller regions.

Sixth Embodiment

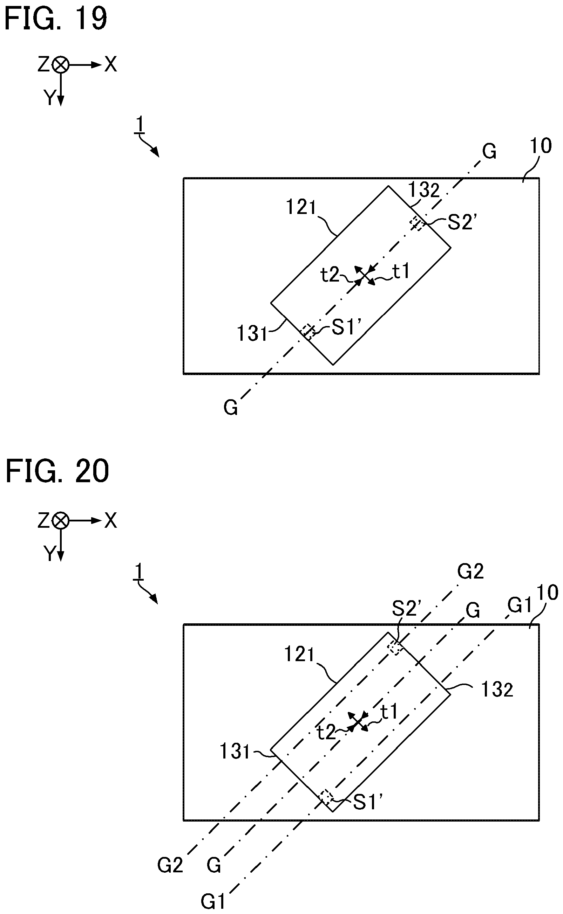

A sixth embodiment of the present invention will now be described. Fig. 19 is an explanatory drawing of a vibratory structure 1 according to the sixth embodiment. In the fifth embodiment, an example is given in which, with regard to the surface of the piezoelectric element $12_1$ to be mounted to the vibratory body 10, entire regions S1 and S2 that are spaced apart from each other and extend in a direction perpendicular to the reference axis G are used as fixing regions. In contrast, in the sixth embodiment, a part each of the regions S1 and S2 are used as fixing regions.

In a piezoelectric element $12_1$ shown in Fig. 19, a part of each of edges, namely, a first edge $13_1$ and a second edge $13_2$, of the piezoelectric element $12_1$ that

are perpendicular to a reference axis G is fixed to the vibratory body 10 respectively as fixing regions S1' and S2'. The fixing region S1' is located on the first edge $13_1$ side relative to a midpoint of the piezoelectric element $12_1$ in a direction of the reference axis G. The fixing region S2' is located on the second edge $13_2$ side relative to the midpoint of the piezoelectric element $12_1$ in the direction of the reference axis G. The fixing region S1' is located on a portion of the reference axis G, and the fixing region S2' is located on another portion of the reference axis G. Each of the fixing regions S1' and S2' is a region that constitutes a part of the piezoelectric element $12_1$, the part being an area that intersects the reference axis G. Using the above configuration, the piezoelectric element $12_1$ deforms over a wide range in a lengthwise direction between the fixing region S1' and the fixing region S2' in relation to principal strains occurring in the direction of the reference axis G of the piezoelectric element $12_1$. In contrast, in relation to principal strains occurring perpendicular to the reference axis G, the piezoelectric element $12_1$ deforms only in small ranges that correspond to the fixing regions S1' and S2'. Thus, mounting fixing regions S1' and S2' part of the piezoelectric element $12_1$ to the vibratory body 10 enables the deformation due to the principal strains tl or the deformation due to the principal strains t2 to be increased and the other to be decreased. Accordingly, vibrational energy can be absorbed efficiently even in regions in which the principal strains tl and the principal strains t2 are reversed in positivity and negativity (tension and compression) and a difference between the magnitudes thereof is relatively small.

The locations of the fixing regions S1' and S2' are not limited to those shown in Fig. 19. For example, as shown in Fig. 20, two reference axes, i.e., a first reference axis G1 and a second reference axis G2, that are parallel to the reference axis G may be set, and the fixing region S1' may be set to be a region that falls on the first reference axis G1, and the fixing region S2' may be set to be a region that falls on the second reference axis G2. In Fig. 20, the fixing region S1' is located on the first edge $13_1$ side relative to a midpoint of the piezoelectric element $12_1$ in a direction of the reference axis G. The fixing region S2' is located on the second edge $13_2$ side relative to the midpoint of the piezoelectric element $12_1$ in the direction of the reference axis G. The fixing region S1' is located on a portion of the first reference axis G1. The fixing region S2' is located on a portion of the second reference axis G2 that is on an opposite side from the first reference axis G1 across the reference axis G. Each of the fixing regions S1' and S2' is a region that constitutes a part of the piezoelectric element $12_1$, and that is in a direction that intersects with the reference axis G. Also by using this configuration, the deformation due to the principal strains t1 or the deformation due to the principal strains t2 can be increased while the other can be decreased. The locations of the fixing regions S1' and S2' need not be on the end portions of the piezoelectric element $12_1$ such as shown in Figs. 19 and 20. Instead, the fixing regions S1' and S2' may be located on an inner side than the end portions of the piezoelectric element $12_1$ if the fixing regions S1' and S2' are located such that a distance between the fixing regions S1' and S2' in the lengthwise direction of the piezoelectric element $12_1$ is greater than a distance therebetween in the widthwise direction of the piezoelectric element $12_1$.

Seventh Embodiment

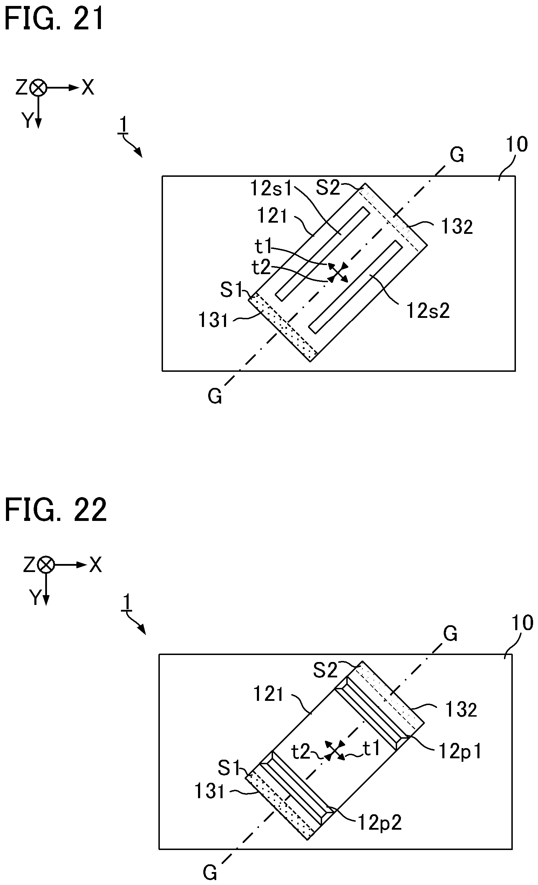

A seventh embodiment of the present invention will now be described. Fig. 21 is an explanatory drawing of a vibratory structure 1 according to the seventh embodiment. In the fifth and sixth embodiments, examples are given in which the piezoelectric element $12_1$ is fixed to the vibratory body 10, with a part (the regions S1 and S2) of the piezoelectric element $12_1$ serving as fixing regions. In contrast, in the seventh embodiment, slits 12sl and 12s2 are additionally formed on a piezoelectric element $12_1$.

The piezoelectric element $12_1$ shown in Fig. 21 is a piezoelectric element in which the two slits 12s1 and 12s2 are formed to extend in the direction of the reference axis G, the piezoelectric element being the same as the piezoelectric element $12_1$ shown in Fig. 19. The slits 12s1 and 12s2 are elongate in the lengthwise direction of the piezoelectric element $12_1$ and are spaced apart from each other in a direction perpendicular to the reference axis G. Formation of such slits 12s1 and 12s2 on the piezoelectric element $12_1$ divides a region in which principal strains occur perpendicular to the reference axis G, thereby enabling suppression of deformation of the piezoelectric element $12_1$ in the widthwise direction.

By use of the slits 12sl and 12s2 of the seventh embodiment, a degree of deformation due to principal strains occurring in the reference axis G direction can be increased relative to that of deformation due to principal strains occurring perpendicular to the reference axis G. In the seventh embodiment, therefore, voltage generated due to deformation of the piezoelectric element $12_1$ can be increased, and as a result, vibrational energy can be absorbed more efficiently. It is of note that while in Fig. 21, an example is shown in which both end portions in a lengthwise direction of the piezoelectric element $12_1$ serve as fixing regions S1 and S2 as in the fifth embodiment, parts (regions S1' and S2') of the fixing regions S1 and S2 of the piezoelectric element $12_1$ may instead be used as fixing regions as in the sixth embodiment.

Eighth Embodiment

An eighth embodiment of the present invention will now be described. Fig. 22 is an explanatory drawing of a vibratory structure 1 according to the eighth embodiment. In the seventh embodiment, an example is given in which the slits 12s1 and 12s2 are formed in the piezoelectric element $12_1$. In contrast, in the eighth embodiment, protrusions 12p1 and 12p2 are formed on the pi-

ezoelectric element $12_1$.

The piezoelectric element $12_1$ shown in Fig. 22 is a piezoelectric element on which there are formed the two protrusions 12p1 and 12p2 extending in a direction perpendicular to the reference axis G. The piezoelectric element $12_1$ shown in Fig. 22 is the same as the piezoelectric element $12_1$ shown in Fig. 19. On the piezoelectric element $12_1$, the protrusions 12p1 and 12p2 protrude from a surface opposite to a surface to be attached to the vibratory body 10. The protrusions 12pl and 12p2 may be formed integrally with the piezoelectric element $12_1$, or may be formed as a separate unit and then fixed thereto. The protrusions 12pl and 12p2 are elongate in the widthwise direction of the piezoelectric element $12_1$, and are spaced apart from each other in the reference axis G direction. Forming such protrusions 12pl and 12p2 on the piezoelectric element $12_1$ makes it possible to thicken parts of the piezoelectric element $12_1$ in a direction perpendicular to the reference axis G. As a result, a region in which principal strains occur perpendicular to the reference axis G is divided, thereby enabling suppression of deformation of the piezoelectric element $12_1$ in the widthwise direction.

With use of the protrusions 12pl and 12p2 according to the eighth embodiment, the degree of deformation due to principal strains in the reference axis G direction is increased relative to the degree of deformation due to principal strains that are perpendicular to the reference axis G. In the eighth embodiment, therefore, voltage generated due to deformation of the piezoelectric element $12_1$ can be increased, and as a result, vibrational energy can be absorbed more efficiently. It is of note that while in Fig. 22, an example is given in which both end portions of the piezoelectric element $12_1$ in the lengthwise direction serve as fixing regions S1 and S2 as in the fifth embodiment, parts (regions S1' and S2') of the fixing regions S1 and S2 of the piezoelectric element $12_1$ may instead be used as fixing regions as in the sixth embodiment.

Ninth Embodiment

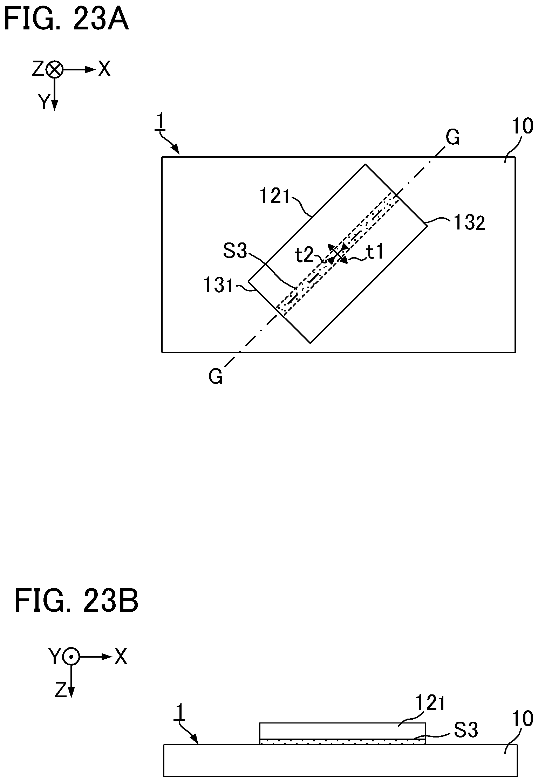

A ninth embodiment of the present invention will now be described. Figs. 23A and Fig. 23B are explanatory drawings of a vibratory structure 1 according to the ninth embodiment. Fig. 23A is a top view, and Fig. 23B is a diagram in which a side surface of the vibratory structure 1 is viewed in a direction that is perpendicular to the reference axis G. In the fifth embodiment, an example is given in which the piezoelectric element $12_1$ is fixed to the vibratory body 10, via the regions S1 and S2, which extend in a direction perpendicular to the reference axis G, and which serve as fixing regions. In contrast, in the ninth embodiment, a piezoelectric element $12_1$ is fixed to a vibratory body 10, via a region S3 that extends in the reference axis G direction, and that serves as a fixing region.

In the piezoelectric element $12_1$ shown in Figs.

23A and 23B, the fixing region S3, which extends in the direction of the reference axis G direction and overlaps the reference axis G, is fixed to the vibratory body 10. Regions other than the fixing region S3 are not fixed. The fixing region S3 has a long side in the lengthwise direction of the piezoelectric element $12_1$, and has a short side in the widthwise direction. The fixing region S3 consists of the fixing regions S1' and S2' and the region between the fixing regions S1' and S2' in Fig. 19. Accordingly, in relation to principal strains in the direction of the reference axis G, the piezoelectric element $12_1$ deforms over an extensive range of the region S3 in the lengthwise direction. Meanwhile, in relation to principal strains perpendicular to the reference axis G, the piezoelectric element $12_1$ deforms in a limited range of the region S3 in the widthwise direction. Thus, if the piezoelectric element $12_1$ is fixed to the vibratory body 10 through the fixing region S3, either one of the degree of deformation due to the principal strains t1 or the degree of deformation due to the principal strains t2 can be increased while the other can be decreased. Accordingly, vibrational energy can be absorbed efficiently if vibration occurs in a region in which a total sum of the principal strains t1 and the principal strains t2 is relatively small.

The location of the fixing region S3 of the piezoelectric element $12_1$ in the ninth embodiment is not limited to a location that overlaps the reference axis G, and may be anywhere in the Y direction if the fixing region S3 is parallel to the reference axis G. Moreover, the fixing region S3 may also be inclined relative to the reference axis G.

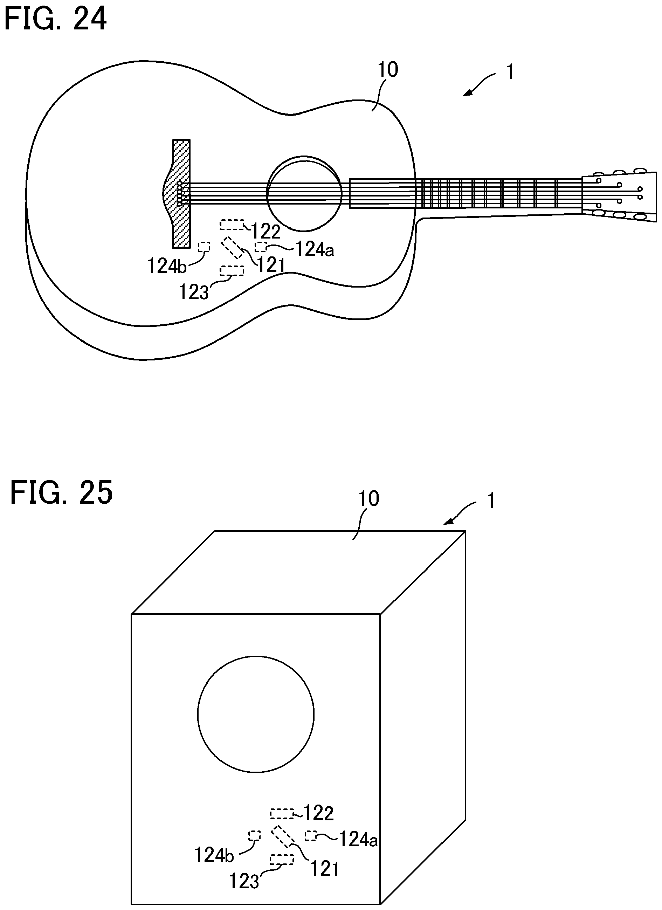

In the first to ninth embodiments described in detail in the foregoing, musical instruments, such as a guitar, violin, piano, and percussion instrument are given as examples of the vibratory structure, and a resonating body of a musical instrument is given as an example of the vibratory body 10. However, the vibratory structure of the present invention is applicable not only to a musical instrument but to any vibratory structures provided with a vibratory body that produces a sound by vibration. The embodiments described above can be applied to acoustic structures, such as a speaker, audio equipment, and electronic musical instruments, or to a variety of other vibratory structures that produce sound by vibration with a plurality of vibration modes. Fig. 24 is a diagram showing an example in which a guitar is used as a vibratory structure. Fig. 25 is a diagram showing an example in which a speaker cabinet is used as a vibratory structure.

Any of the fifth to ninth embodiments may be combined with any of the first to fourth embodiments, as appropriate. For example, in the fifth, sixth, or ninth embodiment described above there may be employed the configuration of the fourth embodiment in which the recesses 32a and the protrusions 34a are fitted to each other to mount a part of the piezoelectric element 12 to the surface of the vibratory body 10. Any of the fifth to ninth embodiments may be applied to at least one piezoelectric element of any of the first to fourth embodiments.

The following modes are derived from at least one of the embodiments and the modifications described above.

The fixing region of the piezoelectric element is a region that extends over the surface of the vibratory body in a direction that intersects with the reference axis. By this configuration, an area of the piezoelectric element that deforms due to principal strains occurring in the direction of the reference axis can be increased, and as a result vibrational energy of the vibratory plate can be absorbed more efficiently. In this case, the fixing region of the piezoelectric element may be a part of the region that is in a direction that intersects with the reference axis.

A vibratory structure according to an aspect of the present invention includes a vibratory body, a piezoelectric element mounted to a surface of the vibratory body, and a resonant circuit operable in response to electrical energy generated by the piezoelectric element, so as to cause a change in a damping characteristic of the vibratory body at a target frequency upon vibration of the vibratory body, and assuming that an axis in a direction of principal strains of the vibratory body is a reference axis, the piezoelectric element is provided with a slit that extends in a direction of the reference axis. By this configuration, deformation of the piezoelectric element can be suppressed by the slit in a direction perpendicular to the reference axis, the deformation being a result of principal strains occurring perpendicular to the reference axis. Accordingly, the degree of deformation of the piezoelectric element due to principal strains in a direction of the reference axis can be increased relative to the degree of deformation thereof due to principal strains occurring perpendicular to the reference axis. As a result, vibrational energy of the vibratory plate can be absorbed efficiently.

A vibratory structure according to another aspect of the present invention includes a vibratory body, a piezoelectric element mounted to a surface of the vibratory body, and a resonant circuit operable in response to electrical energy generated by the piezoelectric element, so as to cause a change in a damping characteristic of the vibratory body at a target frequency upon vibration of the vibratory body. Assuming that an axis in a direction of principal strains of the vibratory body is a reference axis, the piezoelectric element is provided with a protrusion that extends in a direction that intersects with the reference axis and protrudes from an opposite surface of the piezoelectric element relative to a surface through which the piezoelectric element is mounted to the vibratory body. By this configuration, due to use of the protrusion, it is made more difficult for the piezoelectric element to deform in a direction perpendicular to the reference axis. Accordingly, a degree of deformation of the piezoelectric element due to principal strains in a direction of the reference axis is increased relative to deformation thereof due to principal strains occurring perpendicular to the reference axis. As a result, vibrational energy of the vibratory plate can be absorbed efficiently.

An acoustic structure according to still another aspect of the present invention includes a resonating body, a piezoelectric element mounted to a surface of the resonating body, and a resonant circuit operable in response to electrical energy generated by the piezoelectric element, so as to cause a change in a damping characteristic of the resonating body at a target frequency upon vibration of the resonating body. Assuming that an axis of the resonating body in a direction of principal strains is a reference axis, the piezoelectric element is fixed at a plurality of fixing regions at different locations in a direction of the reference axis. Examples of the acoustic structure include musical instruments, such as a guitar, violin, piano, and percussion instrument, and also electronic musical instruments and audio equipment, such as a speaker.

A vibratory structure according to still yet another aspect of the present invention includes a vibratory body, a plurality of piezoelectric elements mounted to a surface of the vibratory body, and resonant circuits each operable in response to electrical energy generated by the corresponding piezoelectric element, so as to cause a change in a damping characteristic of the vibratory body at a corresponding target frequency upon vibration of the vibratory body, and the target frequency differs for each of at least two of the plurality of resonant circuits.

By this configuration, vibration components at a plurality of differing target frequencies upon vibration of the vibratory body are adjusted individually by a plurality of resonant circuits to desired discrete damping values. Accordingly, in contrast to the technology of Patent Document 1 in which only vibration components proximate to a single resonant frequency are damped, it is possible to adjust vibration damping characteristics of the vibratory body for each vibration mode and, in turn, adjust acoustic characteristics (tone colors) of sounds produced by vibration of the vibratory body in various ways.

In the configuration described above, each resonant circuit is provided with an inductor circuit including an inductor and a resistor that are connected in series to the piezoelectric element. This configuration is advantageous because there is no need to provide an external power source.

In the configuration described above, it is preferable that each of the piezoelectric elements be mounted to a surface of the vibratory body at a location and region where an amount of in-plane strains is relatively large in the vibration mode in accordance with the target frequency for which the resonant circuit corresponding to each piezoelectric element damps vibration. Accordingly, an amount of strain deformation of the piezoelectric element can be increased, and thus vibrational energy can be absorbed efficiently.

In this configuration, at least two of the plurality of piezoelectric elements are stacked one on the other. With the piezoelectric elements being mounted to the surface of the vibratory body while being stacked, an area of an arrangement for the piezoelectric elements can be reduced compared to a case in which such stacking is not carried out.

In the configuration described above, the plurality of piezoelectric elements are held (clamped) against the vibratory body by a holding member. By this configuration, the piezoelectric elements can be detachably mounted to the surface of the vibratory body. Thus, the piezoelectric elements may be mounted to the vibratory body provisionally by the holding member, and the piezoelectric elements may be fixed to the vibratory body at optimal locations. Furthermore, since the vibratory body is held with the holding member, it is also possible to mount the piezoelectric elements on both surfaces of the vibratory body.

In the configuration described above, either one of the surfaces of the vibratory body or the piezoelectric element may be formed to have recesses, and the other formed to have protrusions that fit into the recesses. The piezoelectric element is mounted to the surface of the vibratory body by fitting the protrusions into the recesses. By this configuration, the piezoelectric element can be detachably mounted to the vibratory body at a desired location.

An acoustic structure according to another aspect of the present invention includes a resonating body, a plurality of piezoelectric elements mounted to a surface of the resonating body, and resonant circuits each operable in response to electrical energy generated by a corresponding piezoelectric element, so as to cause a change in a damping characteristic of the resonating body at a corresponding target frequency upon vibration of the resonating body, with the target frequency being different for each of at least two of the resonant circuits. Examples of the acoustic structure include musical instruments, such as a guitar, violin, piano, and percussion instrument, and also electronic musical instruments and audio equipment, such as a speaker.

The present invention has been described with reference to embodiments, but the present invention is not limited to the embodiments described above. Various changes comprehensible to a person skilled in the art can be made to the configurations and details of the present invention, so long as they remain within the scope of the present invention. The present application claims priority based on Japanese Patent Application No. 2015-191052 filed on September 29th, 2015, and Japanese Patent Application No. 2015-191053 filed on September 29th, 2015, the entire contents of which are incorporated herein.

Description of Reference Signs

| | |
|---|---|
| 1: | vibratory structure |
| 10: | vibratory body |

12 (12$_1$-12$_4$):   piezoelectric element
12s1, 12s2:   slits
12p1, 12p2:   protrusions
14 (14$_1$-14$_4$):   inductor circuit
16 (16$_1$-16$_4$):   resonant circuit
20:   holding member
23:   base end portion
23a:   hole
25:   base end portion
25a:   hole
26:   supporting member
32:   vibratory body mounting plate
32a:   recess
34:   piezoelectric element mounting plate
34a:   protrusion
L$_1$-L$_4$:   inductors
R$_1$-R$_4$:   resistor
G:   reference axis
K:   flat spring
t1, t2:   principal strains
S1, S2:   fixing regions
S1', S2':   fixing regions
S3:   fixing region

**Claims**

1. A vibratory structure comprising:

   a vibratory body;
   a piezoelectric element mounted to a surface of the vibratory body; and
   a resonant circuit operable in response to electrical energy generated by the piezoelectric element, so as to cause a change in a damping characteristic of the vibratory body at a target frequency upon vibration of the vibratory body, wherein
   assuming that an axis in a direction of principal strains of the vibratory body is a reference axis, the piezoelectric element is fixed at a plurality of fixing regions at different locations in a direction of the reference axis.

2. The vibratory structure according to claim 1, wherein the piezoelectric element is provided with a slit that extends in the direction of the reference axis.

3. The vibratory structure according to claim 1, wherein the piezoelectric element is provided with a protrusion that extends in a direction intersecting with the reference axis and protrudes from a surface opposite to a surface that is mounted to the vibratory body.

4. The vibratory structure according to claim 1, wherein

   the piezoelectric element includes a first edge and a second edge that intersect with the reference axis,
   the plurality of fixing regions include a first fixing region located on a side of the first edge with respect to a midpoint, of the piezoelectric element, in the direction of the reference axis and a second fixing region located on a side of the second edge with respect to the midpoint,
   the first fixing region is located on a part of the reference axis,
   the second fixing region is located on another part of the reference axis, and
   each of the first and second fixing regions is a part of the piezoelectric element, the part being oriented in a direction that intersects with the reference axis.

5. The vibratory structure according to claim 1, wherein

   the piezoelectric element includes a first edge and a second edge that intersect with the reference axis,
   the plurality of fixing regions include a first fixing region located on a side of the first edge with respect to a midpoint, of the piezoelectric element, in the direction of the reference axis and a second fixing region located on a side of the second edge with respect to the midpoint,
   the first fixing region is located on a part of a first reference axis that is parallel to the reference axis,
   the second fixing region is located on a part of a second reference axis on an opposite side of the reference axis from the first reference axis, the second reference axis being parallel to the reference axis, and
   each of the first and second fixing regions is a part of the piezoelectric element, the part being oriented in a direction that intersects with the reference axis.

6. The vibratory structure according to claim 4, wherein the piezoelectric element is also fixed at a region between the plurality of fixing regions.

7. The vibratory structure according to any one of claims 1 to 6, wherein the vibratory body is a resonating body.

8. The vibratory structure according to any one of claims 1 to 6, wherein

   the piezoelectric element is one of a plurality of piezoelectric elements mounted to a surface of the vibratory body,
   the vibratory structure further comprises a plurality of resonant circuits, where one each of the plurality of resonant circuits corresponds to one each of the plurality of piezoelectric elements and each of the plurality of resonant circuits is configured to operate in response to electrical energy generated by the corresponding piezoelectric element, to cause a change in a damping characteristic of the vibratory body at a corresponding target frequency upon vibration of the vibratory body, and

the target frequency differs for each of at least two of the plurality of resonant circuits.

9. The vibratory structure according to claim 8, wherein at least two of the plurality of piezoelectric elements are stacked one on top of the other.

10. The vibratory structure according to claim 8, wherein the plurality of piezoelectric elements are held against the vibratory body by a holding member.

11. The vibratory structure according to claim 8, wherein

either one of a surface of the vibratory body or each piezoelectric element is formed with recesses and the other is formed with protrusions that fit into the recesses, and

the piezoelectric element is mounted to the surface of the vibratory body with the protrusions fitted into the recesses.

12. The vibratory structure according to claim 8, wherein the vibratory body is a resonating body.

FIG. 1

FIG. 2

## FIG. 3

## FIG. 4

# FIG. 5

# FIG. 6

# FIG. 7

VIBRATION MODE

# FIG. 8

# FIG. 9

FIG. 10

Y⊙→X
Z↓

20    22    10    1
26    123
122
24

FIG. 11

Y⊙→X
Z↓

20    22    23    23a    K    10    1
26    123
122
24    25    25a    K

FIG. 12

Z↖X
Y↓

1    10
22b    124a
20    24b
22a
26    123
24a

## FIG. 13

## FIG. 14A

## FIG. 14B

## FIG. 15

## FIG. 16

## FIG. 17

## FIG. 18

## FIG. 19

## FIG. 20

## FIG. 21

## FIG. 22

# FIG. 23A

# FIG. 23B

FIG. 24

FIG. 25

## INTERNATIONAL SEARCH REPORT

| International application No. |
| --- |
| PCT/JP2016/077345 |

**A. CLASSIFICATION OF SUBJECT MATTER**
*H02N2/18(2006.01)i, F16F15/02(2006.01)i*

According to International Patent Classification (IPC) or to both national classification and IPC

**B. FIELDS SEARCHED**

Minimum documentation searched (classification system followed by classification symbols)
H02N2/18, F16F15/02

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2008-232331 A  (Railway Technical Research Institute),<br>02 October 2008 (02.10.2008),<br>paragraphs [0002] to [0004], [0022] to [0024], [0034] to [0035]; fig. 1, 6<br>(Family: none) | 1-2,4,7-9, 11-12<br>3,5-6,10 |
| Y<br>A | JP 2002-61708 A  (NKK Corp.),<br>28 February 2002 (28.02.2002),<br>paragraphs [0024] to [0032]; fig. 1 to 2<br>(Family: none) | 1-2,4,7-9, 11-12<br>3,5-6,10 |
| Y | WO 2013/027741 A1  (NEC Corp.),<br>28 February 2013 (28.02.2013),<br>description, page 5, line 26 to page 6, line 3; fig. 4<br>(Family: none) | 2,7-9,11-12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>29 November 2016 (29.11.16) | Date of mailing of the international search report<br>06 December 2016 (06.12.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/077345 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2006-183761 A  (Toyota Motor Corp.), 13 July 2006 (13.07.2006), paragraphs [0012] to [0017]; fig. 1 (Family: none) | 8-9,11-12 |
| Y | JP 2000-357824 A  (Tokkyokiki Corp.), 26 December 2000 (26.12.2000), paragraphs [0041] to [0044]; fig. 1 to 2 (Family: none) | 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002061708 A
- JP 2015191052 A
- JP 2015191053 A